(19) Europäisches Patentamt
European Patent Office
Office européen des brevets

(11) EP 2 093 258 B1

(12) **EUROPEAN PATENT SPECIFICATION**

(45) Date of publication and mention of the grant of the patent:
**11.07.2012 Bulletin 2012/28**

(21) Application number: **09152447.0**

(22) Date of filing: **10.02.2009**

(51) Int Cl.:
***C09B 67/22*** *(2006.01)* ***C09D 11/00*** *(2006.01)*
***G03G 9/09*** *(2006.01)*

(54) **Infrared dye composition, infrared ray absorbing ink and electrophotographic toner**

Infrarot-Farbstoffzusammensetzung, Infrarotstrahl-Absorbierungstinte und elektrofotografischer Toner

Composition de colorant infrarouge, encre absorbant le rayonnement infrarouge et toner électrophotographique

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **13.02.2008 JP 2008031836**

(43) Date of publication of application:
**26.08.2009 Bulletin 2009/35**

(73) Proprietor: **FUJIFILM Corporation**
**Minato-ku**
**Tokyo (JP)**

(72) Inventors:
- **Furukawa, Kazushi**
  **Kanagawa (JP)**
- **Kashiwagi, Nobuyoshi**
  **Kanagawa (JP)**
- **Kimura, Keizo**
  **Kanagawa (JP)**
- **Yamakawa, Katsuyoshi**
  **Kanagawa (JP)**

(74) Representative: **HOFFMANN EITLE**
**Patent- und Rechtsanwälte**
**Arabellastraße 4**
**81925 München (DE)**

(56) References cited:
**EP-A1- 0 782 164** **EP-A2- 0 313 943**
**EP-A2- 1 767 587** **WO-A1-03/038003**
**WO-A1-2007/111157**

- **DATABASE WPI Week 200261 Thomson Scientific, London, GB; AN 2002-569291 XP002596774 -& JP 2002 146254 A (KONICA CORP) 22 May 2002 (2002-05-22)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 093 258 B1

## Description

The present invention relates to an infrared dye composition, and more particularly to an infrared dye composition having gray balance in the visible light region, light-fastness, and other physical properties, for use in optoelectronics products including an infrared ray absorbing ink, such as an infrared ray absorbing printing ink or infrared ray absorbing ink jet ink, an infrared ray absorbing recording material, such as an electrophotographic toner; and an infrared ray absorbing filter.

Description of the Related Art

A near-infrared ray absorbing material is used for a near-infrared ray absorbing recording material, such as a near-infrared ray absorbing printing ink. When a near-infrared ray absorbing material is produced, some uses thereof require a non-conspicuous dye. However, almost all near-infrared ray absorbing dyes have secondary absorption in a part of the visible light region and a main absorption in the near-infrared region. Thus, color due to the secondary absorption has been regarded as a problem. For example, Japanese Patent Application Laid-Open (JP-A) No. 2007-56105 discloses a phthalocyanine dye having a specific structure with a high visible light transmittance, an excellent balance in transmittance at wavelengths of blue (around 460 nm), green (around 545 nm), and red (around 610 nm), and a high cut efficiency of near-infrared light in a wavelength range of from 850 nm to 950 nm. Moreover, JP-A No. 2003-262719 discloses, as a near-infrared ray absorbing filter for use in a plasma display, a near-infrared ray absorbing filter having an absorption transmittance of 40% or higher in which a filter having an average transmittance in a range of from 800 nm to 900 nm of 10% or lower and a dye having an absorption in the visible light region are used in combination.

WO 03/038003 describes an ink composition comprising a charge generating material and a medium wherein the charge generating material has an absorption maximum in each of the near infrared and visible regions of the electromagnetic spectrum.

SUMMARY OF THE INVENTION

The present invention has been made in view of the above circumstances and provides an infrared dye composition, an infrared ray absorbing ink and an electrophotographic toner with the following aspects.

A first aspect of the present invention provides an infrared dye composition according to claim 1 or according to claim 2.

A second aspect of the present invention provides an infrared ray absorbing ink including the infrared dye composition according to the first aspect of the invention described above.

A third aspect of the present invention provides an electrophotographic toner including the infrared dye composition according to the first aspect of the invention described above.

BRIEF DESCRIPTION OF THE DRAWINGS

Fig. 1 is a spectral absorption spectrum of an infrared dye composition of the present invention.

Fig. 2 is a spectral absorption spectrum of an infrared dye composition having another composition of the present invention.

Fig. 3 is a spectral reflection spectrum of printed matter that uses an ink containing the infrared dye composition of the present invention.

Fig. 4 is a spectral reflection spectrum of printed matter that uses an ink containing the infrared dye composition having another composition of the present invention.

Fig. 5 is a spectral absorption spectrum of a comparative infrared dye composition.

Fig. 6 is a spectral reflection spectrum of printed matter that uses an ink containing the comparative infrared dye composition.

DETAILED DESCRIPTION OF THE INVENTION

An object of the present invention is to provide an infrared dye composition having gray balance in the visible light region, light-fastness, and other physical properties, for use in optoelectronics products including an infrared ray absorbing ink, such as an infrared ray absorbing printing ink or infrared ray absorbing ink jet ink, an infrared ray absorbing recording material, such as a electrophotographic toner, and an infrared ray absorbing filter.

The phthalocyanine dye disclosed in JP-A No. 2007-56105 has a specific structure in which an $OR^2$ group or

an $NHR^3$ group is located at the α position of a phthalocyanine skeleton and an $SR^1$ group is located at the β position thereof, and thus has had a problem with difficulty in synthesis, resulting in increased costs.

Moreover, the near-infrared ray absorbing filter disclosed in JP-A No. 2003-262719 uses a diarylthiol metal complex as an infrared dye, and coloring due to secondary absorption of the infrared dye in the visible light region is corrected with a dye having absorption in the visible light region. Thereby, although a gray color tone may be provided, it has had a problem in that the visible light transmittance decreases on the whole.

Therefore, an infrared dye composition which has a high visible light transmittance and is substantially free from coloring has been demanded particularly for use in a near-infrared ray absorbing recording material, such as a near-infrared ray absorbing printing ink or the like.

After earnest research by the present inventors, the aim of the present invention has been addressed by the provision of an infrared dye composition comprising at least:

a compound (I) whose spectral absorption maximum wavelength in a range of from 400 nm to 1,050 nm is in a range of from 750 nm to 1,050 nm; and
a compound (II) whose spectral absorption maximum wavelength in a range of from 400 nm to 1,050 nm is in a range of from 400 nm to 700 nm, wherein
when an absorbance of the infrared dye composition at a spectral absorption maximum wavelength in the range of from 750 nm to 1,050 nm is designated as 1, a maximum absorbance (Dmax) of the infrared dye composition in the range of from 400 nm to 700 nm is 0.5 or lower, and a ratio (Dmax/Dmin) of the maximum absorbance (Dmax) to a minimum absorbance (Dmin) of the infrared dye composition in the range of from 400 nm to 700 nm is 10 or lower.

Preferably, the infrared dye composition comprises two or more of compound (II).
Preferably, the Dmax/Dmin ratio is 4 or lower.
Preferably, the maximum absorbance (Dmax) is 0.2 or lower.
Preferably, the compound (I) comprises a naphthalocyanine dye or a diimonium compound.
Preferably, the naphthalocyanine dye is represented by the following formula (I-a).

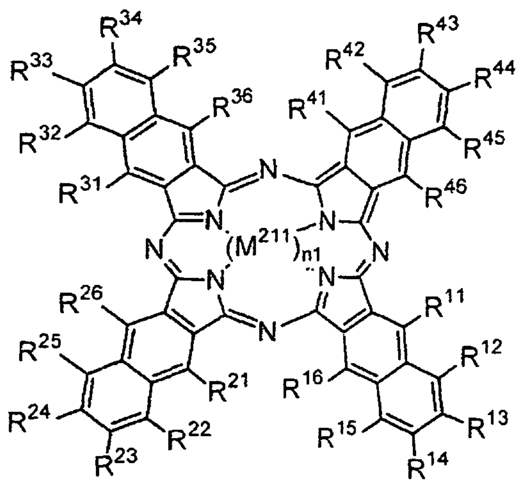

Formula (I-a)

In formula (I-a), $R^{11}$, $R^{12}$, $R^{13}$, $R^{14}$, $R^{15}$, $R^{16}$, $R^{21}$, $R^{22}$, $R^{23}$, $R^{24}$, $R^{25}$, $R^{26}$, $R^{31}$, $R^{32}$, $R^{33}$, $R^{34}$, $R^{35}$, $R^{36}$, $R^{41}$, $R^{42}$, $R^{43}$, $R^{44}$, $R^{45}$, and $R^{46}$ each independently represent a hydrogen atom or a substituent selected from the group consisting of a halogen atom, an alkyl group, an alkenyl group, an alkynyl group, an aryl group, a cyano group, a hydroxy group, a nitro group, a carboxy group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a

carbamoyl group, an imido group, a phosphino group, a phosphinyl group, a phosphinyloxy group, a phosphinylamino group, and a silyl group. $M^{211}$ represents a hydrogen atom, a metal ion or a group containing a metal ion. nl is 1 or 2.

Preferably, the diimonium compound is represented by the following formula (V).

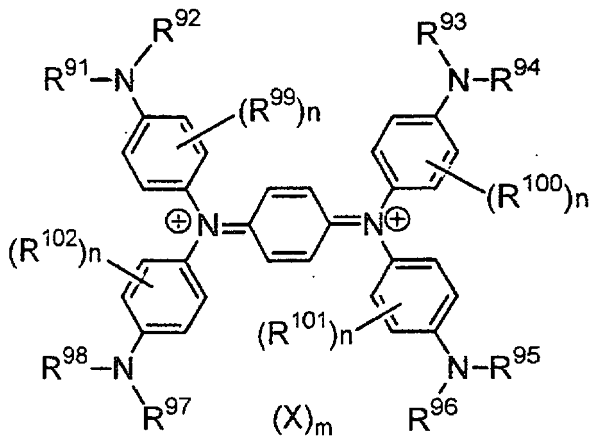

Formula (V)

In formula (V), $R^{91}$, $R^{92}$, $R^{93}$, $R^{94}$, $R^{95}$, $R^{96}$, $R^{97}$, and $R^{98}$ each independently represent a hydrogen atom, an alkyl group, a cycloalkyl group, an aryl group, or an aralkyl group; $R^{99}$, $R^{100}$, $R^{101}$, and $R^{102}$ each independently represent an alkyl group, an alkoxy group, an aryloxy group, a halogen atom, an alkoxycarbonyl group, an amino group, an alkyl-substituted amino group, an amido group, a sulfonamido group, a cyano group, a nitro group, or a carboxy group; $R^{91}$ and $R^{92}$, $R^{93}$ and $R^{94}$, $R^{95}$ and $R^{96}$, $R^{97}$ and $R^{98}$, $R^{91}$ and $R^{99}$, $R^{92}$ and $R^{99}$, $R^{93}$ and $R^{100}$, $R^{94}$ and $R^{100}$, $R^{95}$ and $R^{101}$, $R^{96}$ and $R^{101}$, $R^{97}$ and $R^{102}$, or $R^{98}$ and $R^{102}$ each independently may bond to each other to form a 5- or 6-membered ring; n is an integer of from 0 to 3; X is an anion or cation required for neutralizing electrical charge in the molecule; and m is an integer of from 0 to 6.

Preferably, the compound (II) is an anthraquinone compound, a thioindigo compound, or a perynone compound.

An infrared ray absorbing ink of the present invention comprises an infrared dye composition comprising at least:

a compound (I) whose spectral absorption maximum wavelength in a range of from 400 nm to 1,050 nm is in a range of from 750 nm to 1,050 nm; and
a compound (II) whose spectral absorption maximum wavelength in a range of from 400 nm to 1,050 nm is in a range of from 400 nm to 700 nm, wherein
when an absorbance of the infrared dye composition at a spectral absorption maximum wavelength in the range of from 750 nm to 1,050 nm is designated as 1, a maximum absorbance (Dmax) of the infrared dye composition in the range of from 400 nm to 700 nm is 0.5 or lower, and a ratio (Dmax/Dmin) of the maximum absorbance (Dmax) to a minimum absorbance (Dmin) of the infrared dye composition in the range of from 400 nm to 700 nm is 10 or lower.

An electrophotographic toner of the present invention comprises an infrared dye composition comprising at least:

a compound (I) whose spectral absorption maximum wavelength in a range of from 400 nm to 1,050 nm is in a range of from 750 nm to 1,450 nm; and
a compound (II) whose spectral absorption maximum wavelength in a range of from 400 nm to 1,050 nm is in a range of from 400 nm to 700 nm, wherein
when an absorbance of the infrared dye composition at a spectral absorption maximum wavelength in the range of from 750 nm to 1,050 nm is designated as 1, a maximum absorbance (Dmax) of the infrared dye composition in the range of from 400 nm to 700 nm is 0.5 or lower, and a ratio (Dmax/Dmin) of the maximum absorbance (Dmax) to a minimum absorbance (Dmin) of the infrared dye composition in the range of from 400 nm to 700 nm is 10 or lower.

According to the present invention, there is provided an infrared dye composition having gray balance in the

visible light region, light-fastness, and other physical properties for use in an infrared ray absorbing ink, such as a near-infrared ray absorbing printing ink or a near-infrared ray absorbing ink, or an electrophotographic toner.

Hereinafter, practical embodiments of the present invention will be described in more detail.

1. Infrared dye composition

The infrared dye composition of the present invention is characterized in that it contains at least:

(1) a compound (I) whose spectral absorption maximum wavelength in a range of from 400 nm to 1,050 nm is in a range of from 750 nm to 1,050 nm ; and
(2) a compound (II) whose spectral absorption maximum wavelength in a range of from 400 nm to 1,050 nm is in a range of from 400 nm to 700 nm, in which
(3) when an absorbance of the infrared dye composition at a spectral absorption maximum wavelength in the range of from 750 nm to 1,050 nm is designated as 1, a maximum absorbance (Dmax) of the infrared dye composition in the range of from 400 nm to 700 nm is 0.5 or lower; and
(4) a ratio (Dmax/Dmin) of the maximum absorbance (Dmax) to a minimum absorbance (Dmin) of the infrared dye composition in the range of from 400 nm to 700 nm is 10 or lower.

(Method of measuring spectral absorption)

The spectral absorption spectrum of the infrared dye composition of the present invention is measured as described later. From the measured spectral absorption spectrum, the spectral absorption maximum wavelength in the wavelength range of from 400 nm to 1,050 nm, a ratio of an absorbance at the spectral absorption maximum wavelength to the maximum absorbance (Dmax) in the range of from 400 nm to 700 nm, the maximum absorbance (Dmax) and the minimum absorbance (Dmin) in the range of from 400 nm to 700 nm can be determined.

A solution for confirming the spectral absorption maximum wavelength is obtained by dissolving the compounds (I) and (II) in an organic or inorganic solvent or water, either singly or as a mixture.
Examples of the organic solvent include amide solvents (e.g., N,N-dimethylformamide, N,N-dimethylacetamide, and 1-methyl-2-pyrrolidone), sulfone solvents (e.g., sulfolane), sulfoxide solvents (e.g., dimethyl sulfoxide), ureido solvents (e.g., tetramethylurea), ether solvents (e.g., dioxane, tetrahydrofuran, and cyclopentyl methyl ether), ketone solvents (e.g., acetone and cyclohexanone), hydrocarbon solvents (e.g., toluene, xylene, and n-decane), halogen solvents (e.g., tetrachloroethane, chlorobenzene, and chloronaphthalene), alcohol solvents (e.g., methanol, ethanol, isopropyl alcohol, ethylene glycol, cyclohexanol, and phenol), pyridine solvents (e.g., pyridine, γ-picoline, and 2,6-lutidine), ester solvents (e.g., ethyl acetate and butyl acetate), carboxylic acid solvents (e.g., acetic acid and propionic acid), nitrile solvents (e.g., acetonitrile), sulfonic acid solvents (e.g., methanesulfonic acid), and amine solvents (e.g., triethylamine and tributylamine).
Examples of the inorganic solvent include sulfuric acid and phosphoric acid.

From the viewpoint of solubility of the compounds (I) and (II), amide solvents, sulfone solvents, sulfoxide solvents, ureido solvents, ether solvents, ketone solvents, halogen solvents, hydrocarbon solvents, alcohol solvents, ester solvents, or nitrile solvents are preferable.

The concentrations of the compounds (I) and (II) for measurement are not particularly limited insofar as the maximum wavelength of spectral absorption can be confirmed, and are preferably in a range of from $1 \times 10^{-7}$ mol/L to $1 \times 10^{13}$ mol/L.
The measurement temperatures are not particularly limited, and are preferably from 0°C to 80°C.

There is no particular limitation on a spectral absorption measurement apparatus, and a common spectral absorption measurement apparatus (e.g., U-4100 spectrophotometer, manufactured by Hitachi High-Technologies Corp.) can be used.

(Components of infrared dye composition)

The infrared dye composition of the present invention contains at least: a compound (I) having a spectral absorption maximum wavelength in a range of from 750 nm to 1,050 nm; and a compound (II) having a spectral absorption maximum wavelength in a range of from 400 nm to 700 nm. The infrared dye composition of the present invention may contain, as components other than the dyes, additives, such as a binder, an antiseptic agent, an electrification modifier, carbon black, a UV-light absorbing material, an antioxidant, a radical trap agent, an emulsifier, and an antifungal agent.

The infrared dye composition of the present invention may be a solid mixture containing only a dye or containing a dye and an additive, i.e., powder, liquid, a mixture of powder and liquid, or may have a state in which they are dispersed in a medium. Examples of the medium include water, an organic solvent, and an organic or inorganic polymer as a binder.

Hereinafter, each constituent component will be described in detail.

(Description on substituent)

First, substituent in the compounds in the present invention will be described.

In this specification, an aliphatic group refers to an alkyl group, a substituted alkyl group, an alkenyl group, a substituted alkenyl group, an alkynyl group, a substituted alkynyl group, an aralkyl group, and a substituted aralkyl group. The alkyl group may be branched or may form a ring. The alkyl group preferably has 1 to 20 carbon atoms, and more preferably 1 to 18 carbon atoms. The alkyl portion of the substituted alkyl group is similar to the above-mentioned alkyl group. The alkenyl group may be branched or may form a ring. The alkenyl group preferably has 2 to 20 carbon atoms, and more preferably 2 to 18 carbon atoms. The alkenyl portion of the substituted alkenyl group is similar to the above-mentioned alkenyl group. The alkynyl group may be branched or may form a ring. The alkynyl group preferably has 2 to 20 carbon atoms, and more preferably 2 to 18 carbon atoms. The alkynyl portion of the substituted alkynyl group is similar to the above-mentioned alkynyl group. The alkyl portions of the aralkyl group and the substituted aralkyl group are similar to the above-mentioned alkyl group. The aryl portions of the aralkyl group and the substituted aralkyl group are similar to an aryl group mentioned later.

Examples of a substituent of the alkyl portions of the substituted alkyl group, substituted alkenyl group, substituted alkynyl group, and substituted aralkyl group include halogen atoms (e.g., a chlorine atom, a bromine atom, and an iodine atom), alkyl groups [Straight-chain, branched, or cyclic, substituted or unsubstituted alkyl groups are mentioned. They include alkyl groups (preferably alkyl groups having 1 to 30 carbon atoms, e.g., methyl, ethyl, n-propyl, isopropyl, t-butyl, n-octyl, eicosyl, 2-chloroethyl, 2-cyanoethyl, and 2-ethylhexyl), cycloalkyl groups (preferably substituted or unsubstituted cycloalkyl groups having 3 to 30 carbon atoms, e.g., cyclohexyl, cyclopentyl and 4-n-dodecylcyclohexyl), bicycloalkyl groups (Preferable are substituted or unsubstituted bicycloalkyl groups having 5 to 30 carbon atoms, i.e., monovalent groups in which one hydrogen atom has been removed from bicycloalkanes having 5 to 30 carbon atoms. For example, bicyclo[1,2,2]heptan-2-yl and bicyclo[2,2,2]octan-3-yl are mentioned.), and tricyclo structures having many ring structures. The alkyl groups (e.g., an alkyl group of an alkylthio group) in substituents described later also refer to alkyl groups having the above-described concept.], alkenyl groups [Straight-chain, branched, or cyclic, substituted or unsubstituted alkenyl groups are mentioned. They include alkenyl groups (preferably substituted or unsubstituted alkenyl groups having 2 to 30 carbon atoms, e.g., vinyl, allyl, prenyl, geranyl, and oleyl),

cycloalkenyl groups (Preferable are substituted or unsubstituted cycloalkenyl groups having 3 to 30 carbon atoms, i.e. monovalent groups in which one hydrogen atom of cycloalkenes having 3 to 30 carbon atoms has been removed. For example, 2-cyclopenten-1-yl and 2-cyclohexen-1-yl are mentioned.), bicycloalkenyl groups (Substituted or unsubstituted bicycloalkenyl groups are mentioned. Preferable are substituted or unsubstituted bicycloalkenyl groups having 5 to 30 carbon atoms, i.e., monovalent groups in which one hydrogen atom of bicycloalkenes having one double bond has been removed. For example, bicyclo[2,2,1]hept-2-en-1-yl and bicyclo[2,2,2]oct-2-en-4-yl are included.], alkynyl groups (preferably substituted or unsubstituted alkynyl groups having 2 to 30 carbon atoms, e.g., ethynyl, propargyl, and a trimethylsilylethynyl group), aryl groups (preferably substituted or unsubstituted aryl groups having 6 to 30 carbons atoms, e.g., phenyl, p-tolyl, naphthyl, m-chlorophenyl, and o-hexadecanoylaminophenyl),

heterocyclic groups (Preferable are monovalent groups in which one hydrogen atom has been removed from 5- or 6-membered, substituted or unsubstituted aromatic or non- aromatic heterocyclic compounds. More preferable are 5- or 6-membered aromatic heterocyclic compounds having 3 to 30 carbon atoms. For example, 2-furil, 2-thienyl, 2-pyrimidinyl, and 2-benzothiazolyl are mentioned.), cyano groups, hydroxy groups, nitro groups, carboxy groups, alkoxy groups (preferably substituted or unsubstituted alkoxy groups having 1 to 30 carbon atoms, e.g., methoxy, ethoxy, isopropoxy, t-butoxy, n-octyloxy, and 2-methoxyethoxy), aryloxy groups (preferably substituted or unsubstituted aryloxy groups having 6 to 30 carbon atoms, e.g., phenoxy, 2-methylphenoxy, 4-t-butylphenoxy, 3-nitrophenoxy, and 2-tetradecanoylaminophenoxy), silyloxy groups (preferably silyloxy groups having 3 to 20 carbon atoms, e.g., trimethylsilyloxy and t-butyldimethylsilyloxy), heterocyclic oxy groups (preferably substituted or unsubstituted heterocyclic oxy groups having 2 to 30 carbon atoms, e.g., 1-phenyltetrazole-5-oxy, and 2-tetrahydropyranyloxy),

acyloxy groups (preferably formyloxy groups, substituted or unsubstituted alkylcarbonyloxy group having 2 to 30 carbon atoms, and substituted or unsubstituted aryl carbonyloxy groups having 6 to 30 carbon atoms, e.g., formyloxy, acetyloxy, pivaloyloxy, stearoyloxy, benzoyloxy, and p-methoxyphenylcarbonyloxy), carbamoyloxy groups (preferably substituted or unsubstituted carbamoyloxy groups having 1 to 30 carbon atoms, e.g., N,N-dimethylcarbamoyloxy, N,N-diethylcarbamoyloxy, morpholinocarbonyloxy, N,N-di-n-octylaminocarbonyloxy, and N-n-octylcarbamoyloxy), alkoxycarbonyloxy groups (preferably substituted or unsubstituted alkoxycarbonyloxy groups having 2 to 30 carbon atoms, e.g., methoxycarbonyloxy, ethoxycarbonyloxy, t-butoxycarbonyloxy, and n-octylcarbonyloxy), aryloxycarbonyloxy groups (preferably substituted or unsubstituted aryloxycarbonyloxy groups having 7 to 30 carbon atoms, e.g., phenoxycarbonyloxy, p-methoxyphenoxycarbonyloxy, and p-n-hexadecyloxyphenoxy carbonyloxy),

amino groups (preferably amino groups, substituted or unsubstituted alkylamino groups having 1 to 30 carbon

atoms, and substituted or unsubstituted anilino group having 6 to 30 carbon atoms, e.g., amino, methylamino, dimethylamino, anilino, N-methyl-anilino, and diphenylamino), acylamino groups (preferably formylamino groups, substituted or unsubstituted alkylcarbonylamino groups having 1 to 30 carbon atoms, and substituted or unsubstituted arylcarbonylamino groups having 6 to 30 carbon atoms, e.g., formylamino, acetylamino, pivaloylamino, lauroylamino, benzoylamino, and 3,4,5-tri-n-octyloxyphenylcarbonylamino), aminocarbonylamino groups (preferably substituted or unsubstituted aminocarbonylamino groups having 1 to 30 carbon atoms, e.g., carbamoylamino, N,N-dimethylaminocarbonylamino, N,N-diethylaminocarbonylamino, and morpholinocarbonylamino), alkoxycarbonylamino groups (preferably substituted or unsubstituted alkoxycarbonylamino groups having 2 to 30 carbon atoms, e.g., methoxycarbonylamino, ethoxycarbonylamino, t-butoxycarbonylamino, n-octadecyloxycarbonylamino, and N-methyl-methoxycarbonylamino), aryloxycarbonylamino groups (preferably substituted or unsubstituted aryloxycarbonylamino groups having 7 to 30 carbon atoms, e.g., phenoxycarbonylamino, p-chlorophenoxycarbonylamino, and m-n-octyloxyphenoxycarbonylamino),

sulfamoylamino groups (preferably substituted or unsubstituted sulfamoylamino groups having 0 to 30 carbon atoms, e.g., sulfamoylamino, N,N-dimethylamino sulfonylamino, and N-n-octylamino sulfonylamino), alkylsulfonylamino groups and aryl sulfonyl amino groups (preferably substituted or unsubstituted alkylsulfonylamino having 1 to 30 carbon atoms and substituted or unsubstituted arylsulfonylamino groups having 6 to 30 carbon atoms, e.g., methylsulfonylamino, butylsulfonylamino, phenylsulfonylamino, 2,3,5-trichlorophenylsulfonylamino, and p-methylphenylsulfonylamino), mercapto groups, alkylthio groups (preferably substituted or unsubstituted alkylthio groups having 1 to 30 carbon atoms, e.g., methylthio, ethylthio, and n-hexadecylthio), arylthio groups (preferably substituted or unsubstituted arylthio having 6 to 30 carbon atoms, e.g., phenylthio, p-chlorophenylthio, and m-methoxyphenylthio),

heterocyclic thio groups (preferably substituted or unsubstituted heterocyclic thio groups having 2 to 30 carbon atoms, e.g., 2-benzothiazolylthio and 1-phenyltetrazol-5-ylthio), sulfamoyl groups (preferably substituted or unsubstituted sulfamoyl groups having 0 to 30 carbon atoms, e.g., N-ethylsulfamoyl, N-(3-dodecyloxypropyl)sulfamoyl, N,N-dimethylsulfamoyl, N-acetylsulfamoyl, N-benzoylsulfamoyl, and N-(N'-phenylcarhamoyl)sulfamoyl), sulfo groups, alkylsulfinyl groups, arylsulfinyl groups (preferably substituted or unsubstituted alkylsulfinyl groups having 1 to 30 carbon atoms and substituted or unsubstituted arylsulfinyl groups having 6 to 30 carbon atoms, e.g., methylsulfinyl, ethylsulfinyl, phenylsulfinyl, and p-methylphenylsulfinyl), alkylsulfonyl groups, arylsulfonyl groups (preferably substituted or unsubstituted alkylsulfonyl groups having 1 to 30 carbon atoms and substituted or unsubstituted arylsulfonyl groups having 6 to 30 carbon atoms, e.g., methylsulfonyl, ethylsulfonyl, phenylsulfonyl, and p-methylphenylsulfonyl),

acyl groups (preferably formyl groups, substituted or unsubstituted alkylcarbonyl groups having 2 to 30 carbon atoms, substituted or unsubstituted arylcarbonyl groups having 7 to 30 carbon atoms, substituted or unsubstituted heterocyclic carbonyl groups having 4 to 30 carbon atoms in which the carbonyl group bonds to a carbon atom of the heterocycle, e.g., acetyl, pivaloyl, 2-chloroacetyl, stearoyl, benzoyl, p-n-octyloxyphenylcarbonyl, 2-pyridylcarbonyl, and 2-furylcarbonyl), aryloxycarbonyl groups (preferably substituted or unsubstituted aryloxycarbonyl groups having 7 to 30 carbon atoms, e.g., phenoxycarbonyl, o-chlorophenoxycarbonyl, m-nitrophenoxycarbonyl, and p-t-butylphenoxycarbonyl), alkoxycarbonyl groups (preferably substituted or unsubstituted alkoxycarbonyl groups having 2 to 30 carbon atoms, e.g., methoxycarbonyl, ethoxycarbonyl, t-butoxycarbonyl, and n-octadecyloxycarbonyl), carbamoyl groups (preferably substituted or unsubstituted carbamoyl groups having 1 to 30 carbon atoms, e.g., carbamoyl, N-methylcarbamoyl, N,N-dimethylcarbamoyl, N,N-di-n-octylcarbamoyl, and N-(methylsulfonyl)cabamoyl),

arylazo groups and heterocyclic azo groups (preferably substituted or unsubstituted arylazo groups having 6 to 30 carbon atoms and substituted or unsubstituted heterocyclic azo groups having 3 to 30 carbon atoms, e.g., phenylazo, p-chlorophenylazo, and 5-ethylthio-1,3,4-thiadiazol-2-ylazo), imido groups (preferably N-succinimido and N-phthalimido), phosphino groups (preferably substituted or unsubstituted phosphino groups having 2 to 30 carbon atoms, e.g., dimethylphosphino, diphenylphosphino, and methylphenoxyphosphino), phosphinyl groups (preferably substituted or unsubstituted phosphinyl groups having 2 to 30 carbon atoms, e.g., phosphinyl, dioctyloxyphosphinyl, and diethoxyphosphinyl), phosphinyloxy groups (preferably substituted or unsubstituted phosphinyloxy groups having 2 to 30 carbon atoms, e.g., diphenoxyphosphinyloxy and dioctyloxyphosphinyloxy), phosphinylamino groups (preferably substituted or unsubstituted phosphinyl amino groups having 2 to 30 carbon atoms, e.g., dimethoxyphosphinylamino and dimethylaminophosphinylamino), and silyl groups (preferably substituted or unsubstituted silyl groups having 3 to 30 carbon atoms, e.g., trimethylsilyl, t-butyldimethylsilyl, and phenyldimethylsilyl).

With respect to functional groups having a hydrogen atom among the above-mentioned functional groups, the hydrogen atom may be removed, and the groups may be further substituted by the above-mentioned group. Examples of such functional groups include an alkylcarbonylaminosulfonyl group, an arylcarbonylaminosulfonyl group, an alkylsulfonylaminocarbonyl group, and an arylsulfonylaminocarbonyl group. Examples thereof include methylsulfonylaminocarbonyl, p-methylphenylsulfonylaminocarbonyl, acetylaminosulfonyl, and benzoylaminosulfonyl.

Examples of a substituent of the aryl portion of the substituted aralkyl group are similar to the examples of a substituent of the substituted aryl groups mentioned later.

In this specification, the aromatic groups refer to aryl groups and substituted aryl groups. To the aromatic groups, an aliphatic ring, another aromatic ring, or a heterocycle may be condensed. The aromatic group preferably has

6 to 40 carbon atoms, more preferably 6 to 30 carbon atoms, and even more preferably 6 to 20 carbon atoms. Among the above, phenyl or naphthyl is preferable as an aryl group, and phenyl is particularly preferable.

The aryl portion of the substituted aryl group is similar to the above-mentioned aryl groups. Examples of substituent of the substituted aryl groups are similar to the above-mentioned examples of substituent of the alkyl portions of a substituted alkyl group, a substituted alkenyl group, a substituted alkynyl group, and a substituted aralkyl group.

In this specification, the heterocyclic groups preferably contain a 5-membered or 6-membered, saturated or unsaturated heterocycle. To the heterocycle, an aliphatic ring, an aromatic ring, or another heterocycle may be condensed. Examples of a heteroatom of the heterocycle include B, N, O, S, Se, and Te. As the heteroatom, N, O, and S are preferable. It is preferable that a carbon atom of the heterocycle has a free valence (monovalent) (it means that the heterocyclic group is to be bonded at a carbon atom thereof). The heterocyclic group preferably has 1 to 40 carbon atoms, more preferably 1 to 30 carbon atoms, and even more preferably 1 to 20 carbon atoms. Examples of the saturated heterocycle include a pyrrolidine ring, a morpholine ring, a 2-bora-1,3-dioxolane ring, and 1,3-thiazolidine ring. Examples of the unsaturated heterocycles include an imidazole ring, a thiazole ring, a benzothiazole ring, a benzooxazole ring, a benzotriazole ring, a benzoselenazole ring, a pyridine ring, a pyrimidine ring, and a quinoline ring. The heterocyclic groups may have a substituent. Examples of the substituent are similar to the previously-mentioned examples of substituent of the alkyl portions of a substituted alkyl group, a substituted alkenyl group, a substituted alkynyl group, and a substituted aralkyl group.

(Compound (I))

The spectral absorption maximum wavelength of the compound (I) in the present invention is in a wavelength range of from 750 nm to 1.050 nm, preferably from 800 nm to 1,000 nm, more preferably from 820 nm to 950 nm, and most preferably from 830 nm to 880 nm.

Examples of the compound (I) include phthalocyanine compounds, naphthalocyanine compounds, diimonium compounds, cyanine compounds, squarylium compounds, polymethine compounds, azomethine compounds, oxonol compounds, croconium compounds, and dithiol metal complexes. Among these, phthalocyanine compounds, naphthalocyanine compounds, diimonium compounds, cyanine compounds, and croconium compounds are preferable, naphthalocyanine compounds and diimonium compounds are more preferable, and naphthalocyanine compounds are the most preferable.

<Naphthalocyanine compound>

A naphthalocyanine dye used in the present invention is preferably a compound represented by the following formula (I-a).

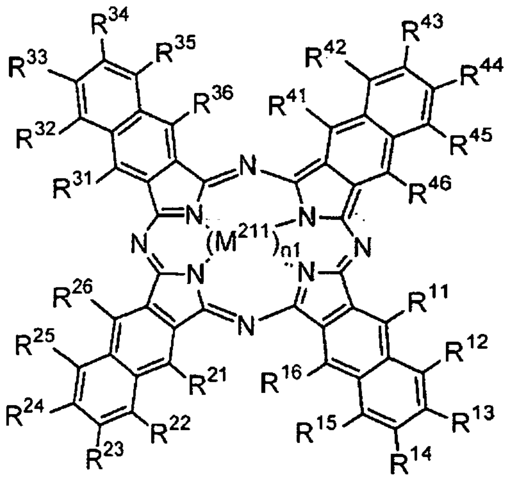

Formula (I-a)

In formula (I-a), $R^{11}$, $R^{12}$, $R^{13}$, $R^{14}$, $R^{15}$, $R^{16}$, $R^{21}$, $R^{22}$, $R^{23}$, $R^{24}$, $R^{25}$, $R^{26}$, $R^{31}$, $R^{32}$, $R^{33}$, $R^{34}$, $R^{35}$, $R^{36}$, $R^{41}$, $R^{42}$, $R^{43}$, $R^{44}$, $R^{45}$, and $R^{46}$ each independently represent a hydrogen atom or a substituent. Examples of the substituent include

those similar to the above-mentioned examples of a substituent of alkyl portions of substituted alkyl groups, substituted alkenyl groups, substituted alkynyl groups, and substituted aralkyl groups.

Preferable as $R^{11}$, $R^{12}$, $R^{13}$, $R^{14}$, $R^{15}$, $R^{16}$, $R^{21}$, $R^{22}$, $R^{23}$, $R^{24}$, $R^{25}$, $R^{26}$, $R^{31}$, $R^{32}$, $R^{33}$, $R^{34}$, $R^{35}$, $R^{36}$, $R^{41}$, $R^{42}$, $R^{43}$, $R^{44}$, $R^{45}$, and $R^{46}$ are a halogen atom, an alkyl group, an alkenyl group, an alkynyl group, an aryl group, a cyano group, a hydroxy group, a nitro group, a carboxy group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkysulfonylamino group, an arylsulfonylamino group, a mercapto group, an alkylthio group, an arylthio group, a heterocyclic thio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an imido group, a phosphino group, a phosphinyl group, a phosphinyloxy group, a phosphinylamino group, and a silyl group.

More preferable are a halogen atom, an alkyl group, an aryl group, a cyano group, a hydroxy group, a nitro group, a carboxy group, an alkoxy group, an aryloxy group, a silyloxy group, a heterocyclic oxy group, an acyloxy group, a carbamoyloxy group, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, a sulfo group, an alkylsulfinyl group, an arylsulfinyl group, an alkylsulfonyl group, an arylsulfonyl group, a carbamoyl group, an imido group, a phosphino group, a phosphinyl group, a phosphinyloxy group, a phosphinylamino group, and a silyl group. Even more preferable are a halogen atom, an alkyl group, an aryl group, a hydroxy group, an alkoxy group, an aryloxy group, an amino group, a mercapto group, an alkylthio group, an arylthio group, a sulfamoyl group, a sulfo group, an alkylsulfinyl group, an arylsulfinyl group, an alkylsulfonyl group and an arylsulfonyl group. Still more preferable are a halogen atom, an alkyl group, an aryl group, an alkoxy group, an aryloxy group, an alkylthio group, and an arylthio group.

Still more preferable are a halogen atom, an alkyl group having 1 to 20 carbon atoms, an aryl group having 6 to 20 carbon atoms, an alkoxy group having 1 to 20 carbon atoms, an aryloxy group having 6 to 20 carbon atoms, an alkylthio group having 1 to 20 carbon atoms, and an arylthio group having 6 to 20 carbon atoms. Still more preferable are an alkyl group having 1 to 8 carbon atoms, an aryl group having 6 to 10 carbon atoms, an alkoxy group having 1 to 8 carbon atoms, an aryloxy group having 6 to 10 carbon atoms, an alkylthio group having 1 to 8 carbon atoms, and an arylthio group having 6 to 10 carbon atoms.

Still more preferable are an alkoxy group having 1 to 6 carbon atoms, an aryloxy group having 6 to 8 carbon atoms, an alkylthio group having 1 to 6 carbon atoms, and an arylthio group having 6 to 8 carbon atoms. An alkoxy group having 1 to 4 carbon atoms is the most preferable.

$M^{211}$ represents a hydrogen atom, a metal ion or a group containing a metal ion. n1 is 1 or 2.

$(M^{211})$n1 is preferably two hydrogen atoms, two $Li^+$ ions, two $Na^+$ ions, two $K^+$ ions, two $Rb^+$ ions, two $Cs^+$ ions, a $Be^{2+}$ ion, an $Mg^{2+}$ ion, a $Ca^{2+}$ion, a $Ti^{2+}$ ion, an $Mn^{2+}$ ion, an $Fe^{2+}$ ion, a $Co^{2+}$ ion, an $Ni^{2+}$ ion, a $Cu^{2+}$ ion, a $Zn^{2+}$ ion, an $Ru^{2+}$ ion, an $Rh^{2+}$ ion, a $Pd^{2+}$ ion, a $Pt^{2+}$ ion, a $Ba^{2+}$ ion, a $Cd^{2+}$ ion, an $Hg^{2+}$ ion, a $Pb^{2+}$ ion, an $Sn^{2+}$ ion, Al-Cl, Al-Br, Al-F, Al-I, Ga-Cl, Ga-F, Ga-I, Ga-Br, In-Cl, In-Br, In-I, In-F, Tl-Cl, Tl-Br, Tl-I, Tl-F, Mn-OH, Fe-Cl, Ru-Cl, $CrCl_2$, $SiCl_2$, $SiBr_2$, $SiF_2$, $SiI_2$, $ZrCl_2$, $GeCl_2$, $GeBr_2$, $GeI_2$, $GeF_2$, $SnCl_2$, $SnBr_2$, $SnI_2$, $SnF_2$, $TiCl_2$. $TiBr_2$, $TiF_2$, $Si(OH)_2$, $Ge(OH)_2$, $Zr(OH)_2$, $Mn(OH)_2$, $Sn(OH)_2$, $TiR_2$, $CrR_2$, $SiR_2$, $SnR_2$, $GeR_2$, $Si(OR)_2$, $Sn(OR)_2$, $Ge(OR)_2$, $Ti(OR)_2$, $Cr(OR)_2$, $Sn(SR)_2$, $Ge(SR)_2$ [R represents an aliphatic group or an aromatic group], VO, MnO, or TiO.

Preferably, $(M^{211})$n1 is two hydrogen atoms, two $Li^+$ ions, two $Na^+$ ions, two $K^+$ ions, two $Rb^+$ ions, a $Be^{2+}$ ion, an $Mg^{2+}$ ion, a $Ca^{2+}$ ion, a $Ti^{2+}$ ion, an $Mn^{2+}$ ion, an $Fe^{2+}$ ion, a $Co^{2+}$ ion, an $Ni^{2+}$ ion, a $Cu^{2+}$ ion, a $Zn^{2+}$ ion, an $Ru^{2+}$ ion, an $Rh^{2+}$ ion, a $Pd^{2+}$ ion, a $Pt^{2+}$ ion, a $Ba^{2+}$ ion, an $Sn^{2+}$ ion, Al-Cl, Al-Br, Ga-Cl, Ga-F, Ga-I, Ga-Br, In-Cl, In-Br, Tl-Cl, Tl-Br, Mn-OH, Fe-Cl, Ru-Cl, $CrCl_2$, $SiCl_2$, $SiBr_2$, $ZrCl_2$, $GeCl_2$, $GeBr_2$, $SnCl_2$, $SnBr_2$, $TiCl_2$, $TiBr_2$, $Si(OH)_2$, $Ge(OH)_2$, $Zr(OH)_2$, $Mn(OH)_2$, $Sn(OH)_2$, $TiR_2$, $CrR_2$, $SiR_2$, $SnR_2$, $GeR_2$, $Si(OR)_2$, $Sn(OR)_2$, $Ge(OR)_2$, $Ti(OR)_2$, $Cr(OR)_2$, $Sn(SR)_2$, $Ge(SR)_2$ [R represents an aliphatic group or an aromatic group], VO, MnO or TiO.

More preferably, $(M^{211})$n1 is two hydrogen atoms, two $Li^+$ ions, two $Na^+$ ions, two $K^+$ ions, a $Be^{2+}$ ion, an $Mg^{2+}$ ion, a $Ca^{2+}$ ion, a $Ti^{2+}$ ion, an $Mn^{2+}$ ion, an $Fe^{2+}$ ion, a $Co^{2+}$ ion, an $Ni^{2+}$ ion, a $Cu^{2+}$ ion, a $Zn^{2+}$ ion, an $Ru^{2+}$ ion, an $Rh^{2+}$ ion, a $Pd^{2+}$ ion, a $Pt^{2+}$ ion, a $Ba^{2+}$ ion, an $Sn^{2+}$ ion, Al-Cl, Ga-Cl, In-Cl, Tl-Cl, Mn-OH, Fe-Cl, Ru-Cl, $CrCl_2$, $SiCl_2$, $ZrCl_2$, $GeCl_2$, $TiCl_2$, $Si(OH)_2$, $Ge(OH)_2$, $Zr(OH)_2$, $Mn(OH)_2$, $TiR_2$, $CrR_2$, $SiR_2$, $GeR_2$, $Si(OR)_2$, $Ge(OR)_2$, $Ti(OR)_2$, $Cr(OR)_2$ [R represents an aliphatic group or an aromatic group], VO, MnO or TiO.

Still more preferably, $(M^{211})$n1 is two hydrogen atoms, an $Mn^{2+}$ ion, VO, a $Zn^{2+}$ ion or a $Cu^{2+}$ ion. Even more preferably, $(M^{211})$n1 is VO, a $Zn^{2+}$ ion or a $Cu^{2+}$ ion. Most preferably, $M^{211}$ is a $Cu^{2+}$ ion, and n1 is 1.

In formula (I-a), bonds between $M^{211}$ and two secondary nitrogen atoms of the naphthalocyanine ring are a covalent bond, an ionic bond or a coordination bond. In the case where $M^{211}$ is a transition metal ion, $M^{211}$ may form coordination bonds with two tertiary nitrogen atoms of the naphthalocyanine ring.

Specific examples of the compounds represented by formula (I-a) according to the present invention are shown below, but the present invention is not limited thereto.

I-1

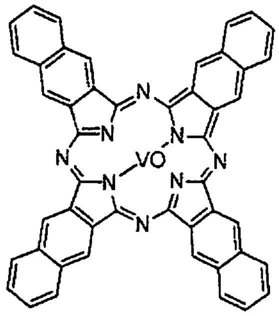

I-2

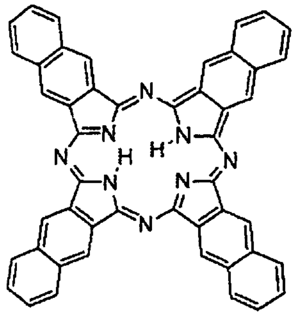

I-3

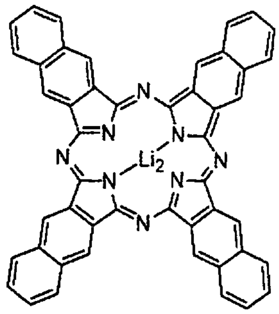

I-4

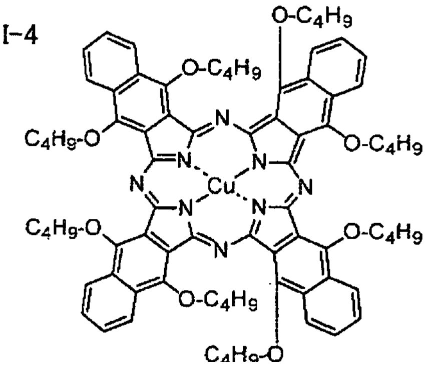

I-5

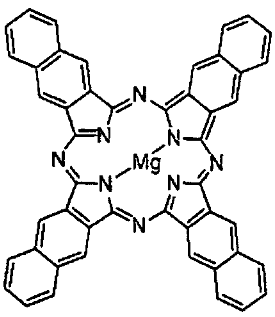

I-6

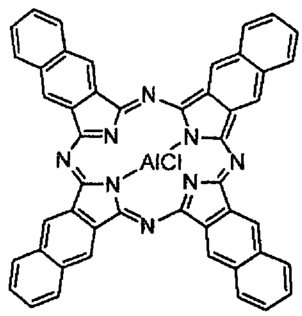

I-7

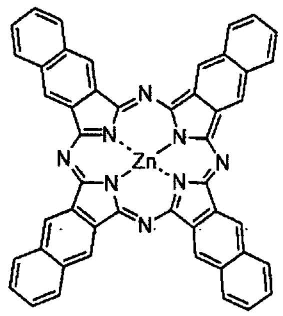

I-8

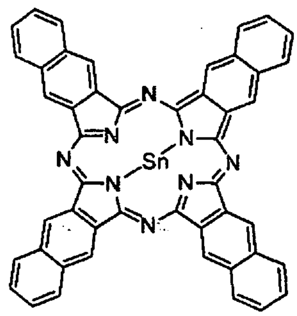

I-9

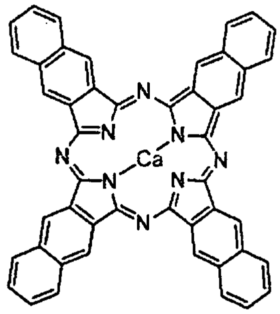

I-10

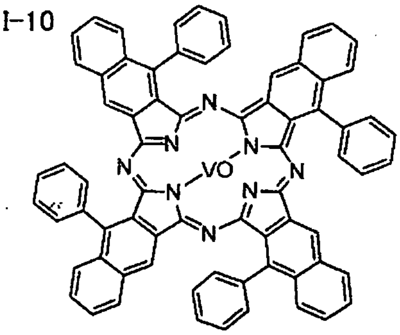

I-11

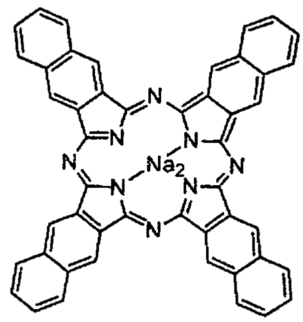

I-12

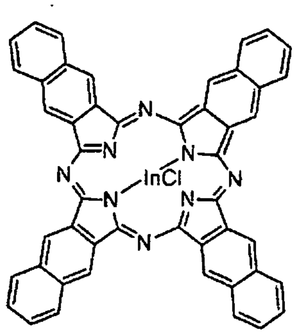

I-13

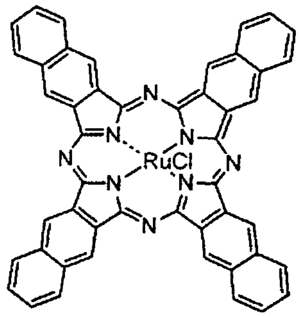

I-14

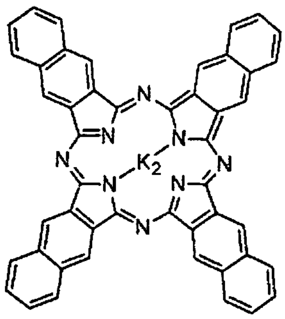

I-15

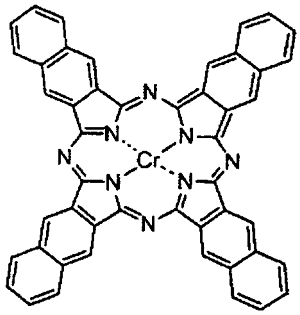

I-16

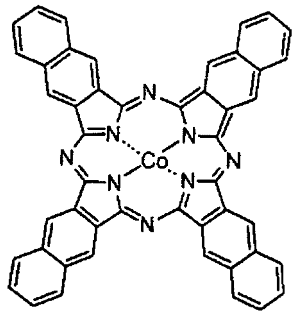

I-17

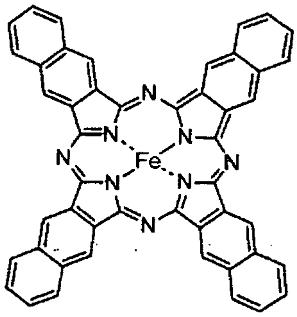

I-18

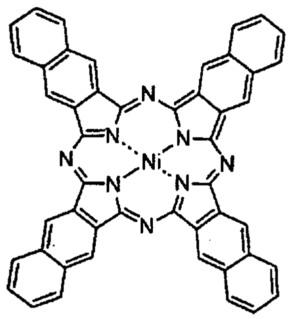

I-19

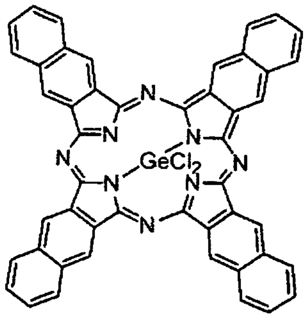

I-20

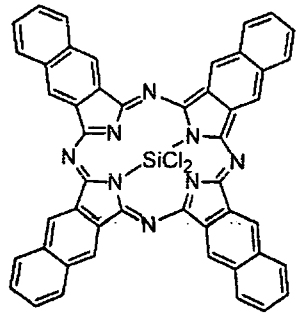

I-21

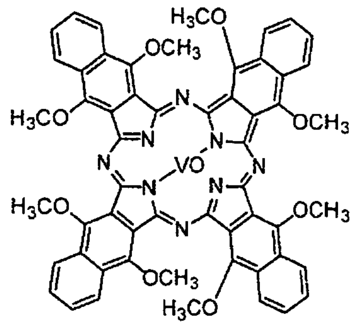

I-22

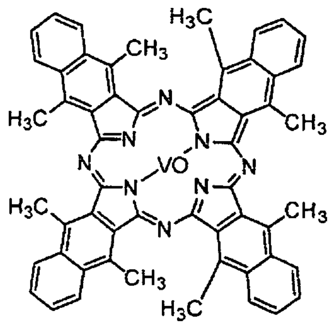

I-23

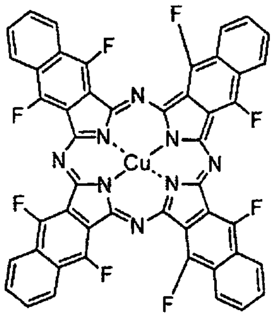

I-24

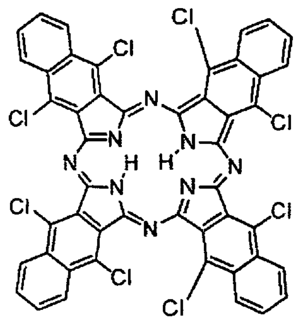

I-25

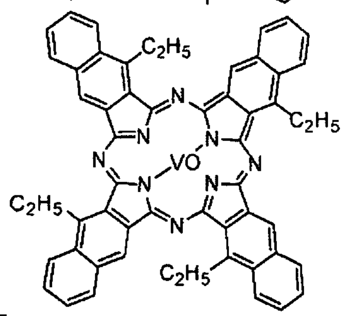

I-26

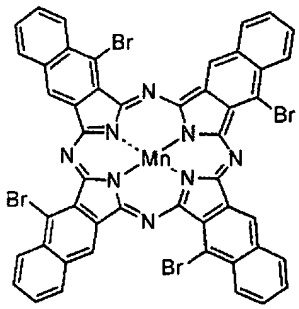

I-27

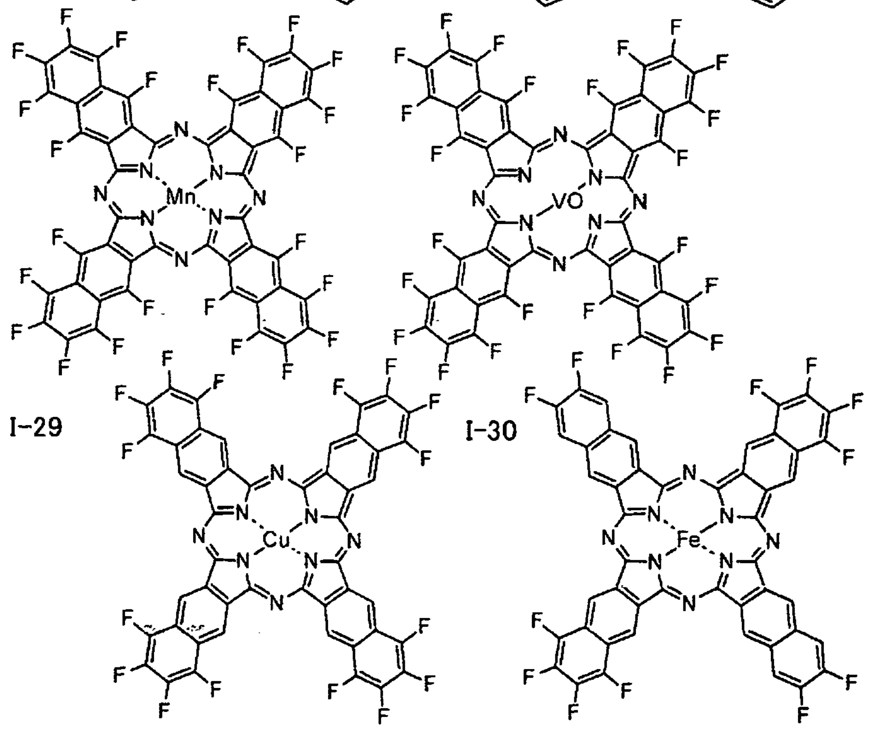

I-28

I-29

I-30

I-31

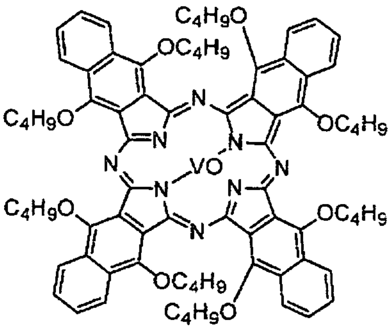

I-32

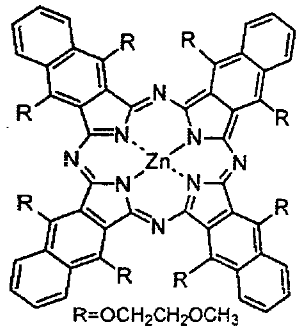

R=OCH2CH2OCH3

I-33

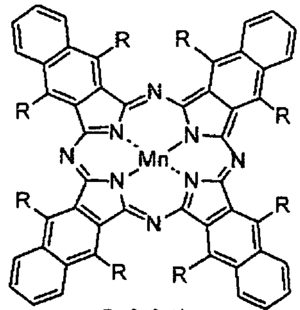

R=S-C3H7

I-34

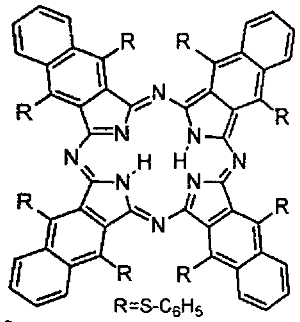

R=S-C6H5

I-35

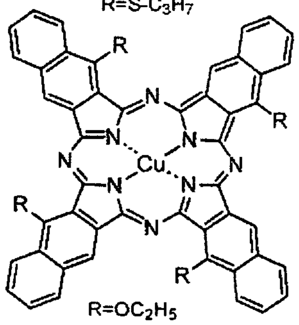

R=OC2H5

I-36

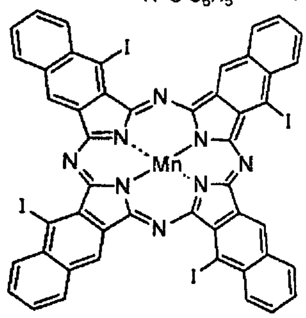

I-37

I-38

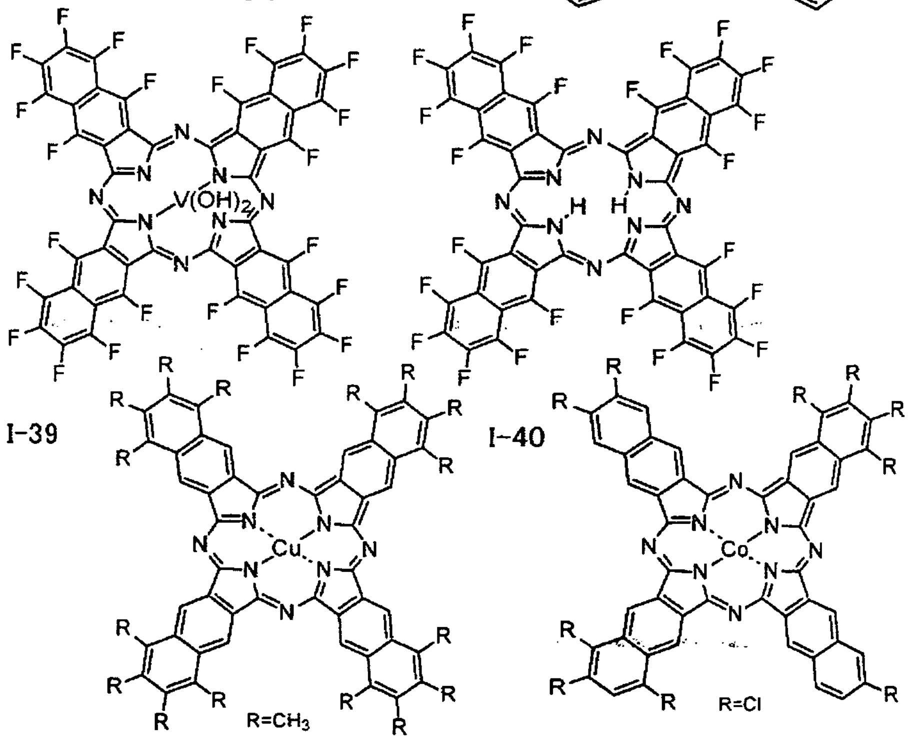

I-39

R=CH3

I-40

R=Cl

Next, a method of producing the compound represented by formula (I-a) will be described. As a reaction for

obtaining the compound represented by formula (I-a), it is known to directly synthesize phthalocyanine and naphthalocyanine having a metal at the center from a corresponding phthalic acid or a derivative thereof (acid anhydride, diamide, dinitrile, etc.) in the coexistence with a metal compound (described in, for example, Chemistry-A European Journal, vol. 9, pages 5123 to 5134 (2003)). During the reaction, it is preferable that a catalyst (e.g., ammonium molybdate) and urea coexist. Or, synthesis thereof can be achieved by once synthesizing a non-metal body of phthalocyanine or naphthalocyanine using a lithium compound, and then using a metal compound as described later. In particular, for synthesizing a metal body of naphthalocyanine, this method is more preferable.

As the proportion of raw materials for synthesizing the compound represented by formula (I-a) using a non-metal body of naphthalocyanine and a metal compound, the amount of the metal compound with respect to 1 mol of the non-metal body of naphthalocyanine is preferably from 0.1 mol to 10 mol, more preferably from 0.5 mol to 5 mol, and even more preferably from 1 to 3 mol.

As the metal compound, inorganic metal compounds and organometallic compounds can be used. Examples thereof include halides (e.g., chlorides and bromides), sulfates, nitrates, cyanides, acetates, and metal acetylacetonato. Among these, chlorides, sulfates, cyanides, and acetates are preferable, chlorides and acetates are more preferable, and acetates are the most preferable.

As a solvent used for the reaction, for example, amide solvents (e.g., N,N-dimethylformamide, N,N-dimethylacetamide, and 1-methyl-2-pyrrolidone), sulfone solvents (e.g., sulfolane), sulfoxide solvents (e.g., dimethyl sulfoxide), ether solvents (e.g., dioxane and cyclopentyl methyl ether), ketone solvents (e.g., acetone and cyclohexanone), hydrocarbon solvents (e.g., toluene and xylene), halogen solvents (e.g., tetrachloroethane and chlorobenzene), alcohol solvents (e.g., 1-butanol, ethylene glycol, and cyclohexanol), and pyridine solvents (e.g., pyridine, γ-picoline, and 2,6-lutidine) are used singly or as a mixture. Among these, amide solvents, sulfone solvents, ether solvents, hydrocarbon solvents, halogen solvents, and pyridine solvents are preferable; sulfone solvents, ether solvents, hydrocarbon solvents, and halogen solvents are more preferable; ether solvents, hydrocarbon solvents, and halogen solvents are even more preferable; halogen solvents are still more preferable; and chlorobenzene is the most preferable.

The reaction temperature is from -30°C to 250°C, preferably from 0°C to 200°C, more preferably from 20°C to 150°C, and even more preferably from 50°C to 100°C. The reaction time is in a range of from 5 minutes to 30 hours.

< Diimonium compound>

In the present invention, the diimonium compound is preferably a compound represented by the following formula (V):

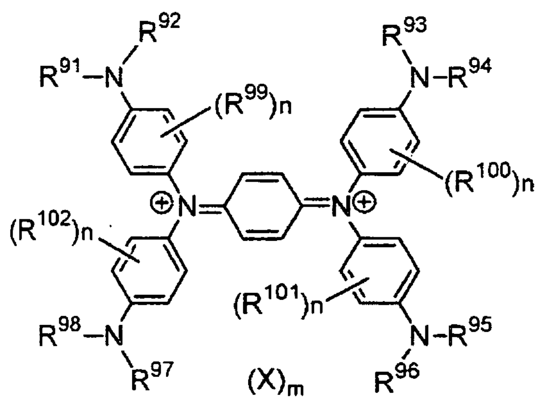

Formula (V)

In formula (V), $R^{91}$, $R^{92}$, $R^{93}$, $R^{94}$, $R^{95}$, $R^{96}$, $R^{97}$, and $R^{98}$ each independently represent a hydrogen atom, an alkyl group, a cycloalkyl group, an aryl group, an aralkyl group or a heterocyclic group. $R^{99}$, $R^{100}$, $R^{101}$, and $R^{102}$ each independently represent an alkyl group, an alkoxy group, an aryloxy group, a halogen atom, an alkoxycarbonyl group, an amino group, an alkyl-substituted amino group, an amido group, a sulfonamido group, a cyano group, a nitro group, or a carboxy group. Each combination of $R^{91}$ and $R^{92}$, $R^{93}$ and $R^{94}$, $R^{95}$ and $R^{96}$, $R^{97}$ and $R^{98}$, $R^{91}$ and $R^{99}$, $R^{92}$ and $R^{99}$, $R^{93}$ and $R^{100}$, $R^{94}$ and $R^{100}$, $R^{95}$ and $R^{101}$, $R^{96}$ and $R^{101}$, $R^{97}$ and $R^{102}$, and $R^{98}$ and $R^{102}$ may bond to each other to form a 5-or 6-membered ring. n is an integer of from 0 to 3. X is an anion or a cation required for neutralizing electrical charge in the molecule; and m is an integer of from 0 to 6.

In formula (V), the alkyl group preferably has I to 20 carbon atoms, more preferably has 1 to 12 carbon atoms, and most preferably has 1 to 8 carbon atoms. Examples of the alkyl group include methyl, ethyl, propyl, butyl, hexyl and undecyl. The alkyl group may be branched. The alkyl group may have a substituent. Examples of the substituent include a halogen atom (F, Cl, Br), an alkoxycarbonyl group (e.g., methoxycarbonyl, ethoxycarbonyl), hydroxy, an alkoxy group (e.g., methoxy, ethoxy, isobutoxy), an aryloxy group (e.g., phenoxy), an acyloxy group (e.g., acetyloxy, butyryloxy, hexyryloxy, benzoyloxy), carboxy and sulfo.

In formula (V), examples of the cycloalkyl group include cyclopentyl and cyclohexyl.

In formula (V), the aryl group preferably has 6 to 12 carbon atoms. Examples of the aryl group include phenyl and naphthyl. The aryl group may have a substituent. Examples of the substituent include an alkyl group having 1 to 8 carbon atoms (e.g., methyl, ethyl, butyl), an alkoxy group having 1 to 6 carbon atoms (e.g., methoxy, ethoxy), an aryloxy group (e.g., phenoxy, p-chlorophenoxy), a halogen atom (F, Cl, Br), an alkoxycarbonyl group (e.g., methoxycarbonyl, ethoxycarbonyl), amino, an alkyl-substituted amino group (e.g., methylamino), an amido group (e.g., acetamido), a sulfonamido group (e.g., methanesulfonamido), cyano, nitro, carboxy and sulfo.

In formula (V), the aralkyl group preferably has 7 to 12 carbon atoms. Examples of the aralkyl group include benzyl and phenethyl. The aralkyl group may have a substituent. Examples of the substituent include an alkyl group having 1 to 8 carbon atoms (e.g., methyl), an alkoxy group having 1 to 6 carbon atoms (e.g., methoxy), a halogen atom (e.g., Cl), carboxy and sulfo.

In formula (V), examples of the heterocyclic group include thienyl, furyl, pyrrolyl, pyrazolyl, pyridyl and indolyl.

In formula (V), the alkoxy group preferably has 1 to 6 carbon atoms. Examples of the alkoxy groups include methoxy and ethoxy.

In formula (V), the aryloxy group may have a substituent. Examples of the substituent include a halogen atom (e.g., Cl). Examples of the aryloxy group include phenoxy and p-chlorophenoxy.

In formula (V), examples of the alkoxycarbonyl group include methoxycarbonyl and ethoxycarbonyl.

In formula (V), examples of the alkyl-substituted amino group include methylamino.

In formula (V), examples of the amido group include acetamido.

In formula (V), examples of the sulfonamido group include methanesulfonamido.

Examples of the rings formed by combining $R^{91}$ and $R^{92}$, $R^{93}$ and $R^{94}$, $R^{95}$ and $R^{96}$ or $R^{97}$ and $R^{98}$ include piperazine ring, piperidine ring, morpholine ring and pyrrolidine ring. Examples of the rings formed by combining $R^{91}$ and $R^{99}$, $R^{92}$ and $R^{99}$, $R^{93}$ and $R^{100}$, $R^{94}$ and $R^{100}$, $R^{95}$ and $R^{101}$, $R^{96}$ and $R^{101}$, $R^{97}$ and $R^{102}$ or $R^{98}$ and $R^{102}$ include julolidine ring and tetrahydroquinoline ring. In the case where $R^{99}$, $R^{100}$, $R^{101}$ or $R^{102}$ is combined with $R^{91}$, $R^{92}$, $R^{93}$, $R^{94}$, $R^{95}$, $R^{96}$, $R^{97}$ or $R^{98}$ to form a ring, the position of $R^{99}$, $R^{100}$, $R^{101}$ or $R^{102}$ is preferably adjacent to the position of $R^{91}$, $R^{92}$, $R^{93}$, $R^{94}$, $R^{95}$, $R^{96}$, $R^{97}$ or $R^{93}$.

In formula (V), examples of the anion represented by X include a halide ion ($Cl^-$, $Br^-$, $I^-$), p-toluenesulfonate ion, ethylsulfate ion, $PF_6^-$, $By_4^-$ and $ClO_4^-$. In the case where the molecule of the compound has two carboxy or sulfo groups, m is 0. In the case where the molecule of the compound has three or more carboxy of sulfo groups, X should be a cation. Examples of the cation include an alkali metal ion (e.g., sodium ion, potassium ion, lithium ion), an ammonium ion (e.g., triethylammonium ion) and a pyridinium ion.

Specific examples of the diimonium compound represented by formula (V) are shown below, but the present invention is not limited thereto.

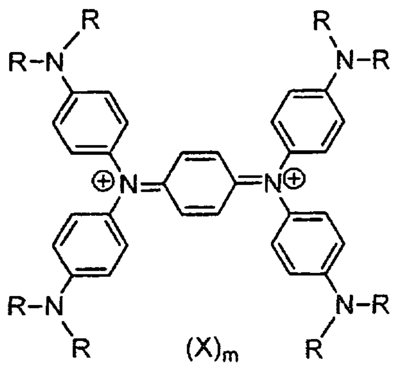

| | R | X | m |
|---|---|---|---|
| (501) | n-$C_4H_9$ | $PF_6^{\ominus}$ | 2 |
| (502) | $CH_2CO_2H$ | $ClO_4^{\ominus}$ | 2 |
| (503) | $C_2H_4SO_3^{\ominus}$ | $K^{\oplus}$ | 6 |
| (504) | $C_4H_8SO_3^{\ominus}$ | $K^{\oplus}$ | 6 |

The diimonium compounds represented by formula (V) can be synthesized by referring to the synthetic method described in Japanese Patent Application Publication (JP-B) No. 43-25335.

<Other compounds>

In the present invention, in addition to the above compounds, phthalocyanine compounds described in JP-A No. 2000-281919; naphthalocyanine compounds described in JP-A Nos. 2-43269 and 2-138382, and Journal of Chemical Society Parkin Transaction I, pages 2453-2458 (1998); diimonium compounds, cyanine compounds, squarylium compounds, polymethine compounds, azomethine compounds, oxonol compounds, and croconium compounds described in JP-A No. 10-180947; and dithiol metal complexes described in JP-A No. 2003-139946 can be used.

(Compound (II))

The compound (II) used in the present invention has a spectral absorption maximum wavelength in a range of from 400 nm to 700 nm.

The compound (II) used in the present invention forms an infrared dye composition with the compound (I). The mixing ratio of the compound (II) is determined in a range where a maximum absorbance (Dmax) in the range of from 400 nm to 700 nm is 0.5 or lower when an absorbance of the infrared dye composition at a spectral absorption maximum wavelength in a range of from 750 nm to 1,050 nm is designated as 1. Furthermore, a compound having absorption in the wavelength range where the absorbance is low is selected according to an absorption spectrum of the compound (I) in the range of from 400 nm to 700 nm so that the ratio (Dmax/Dmin) of the maximum absorbance (Dmax) to a minimum absorbance (Dmin) of the infrared dye composition in the range of from 400 nm to 700 nm might be 10 or lower.

In the present invention, two or more of compound (II) may be used in combination, and preferably one to five of them, more preferably one to four of them, even more preferably two to four of them, and most preferably two of them are used in combination.

Preferable examples of the compound (II) used in the present invention include azo compounds, anthraquinone compounds, phthalocyanine compounds, indigo compounds, thioindigo compound, diphenylmethane compounds, triphenylmethane compounds, polymethine compounds, azomethine compounds, xanthene compounds, acridine compounds, quinoneimine compounds, cyanine compounds, quinoline compounds, nitro compounds, naphthoquinone compounds, perylene compounds, and perynone compounds.

Among these, azo compounds, anthraquinone compounds, phthalocyanine compounds, thioindigo compounds, azomethine compounds, xanthene compounds, cyanine compounds, quinoline compounds, nitro compounds, naphthoquinone compounds, perylene compounds, and perynone compound are preferable. Azo compounds, anthraquinone compounds, phthalocyanine compounds, thioindigo compounds, and perynone compounds are more preferable. Anthraquinone compounds, thioindigo compounds, and perynone compounds are the most preferable.

Specific examples of the compound (II) include the following compounds, but the present invention is not limited thereto.

C. I. Disperse Yellows 3, 23, 42, 54, 64, 71, 79, 82, 114, 119, 163, and 211, C.I. Solvent Yellows 2, 5, 14, 16, 19, 21, 33, 56, 72, 82, 93, 98, 114, and 145, 160: 1, 163, and 176, C.I. Disperse Reds 1, 5, 9, 11, 13, 22, 50, 60, 73, 74, 82, 91, 92, 135, 152, 153, 167, 177, 179, 277, 343, 356, and 362, C.I. Disperse Blues 3, 56, 60, 73, 77, 79, 87, 102, 148, 165, 183, 257, 284, 366, and 367, C.I. Disperse Violets 1, 8, 26, 28, 31, 33, 36, 63, 77, and 93, C.I. Solvent Reds 1, 3, 8, 23, 24, 25, 26, 49, 52, 111, 122, 132, 135, 146, 168, 179, 196, 197, 207, and 242, C.I. Solvent Blues 4, 5, 35, 36, 63, 70, 78, 87, 94, 97, 101, and 104, and C.I. Solvent Violets 8, 9, 13, 14, 31, 36, and 59 are mentioned.

(Infrared dye composition)

In the infrared dye composition in the present invention, when an absorbance of the infrared dye composition at a spectral absorption maximum wavelength in a range of from 750 nm to 1,050 nm is designated as 1, a maximum absorbance (Dmax) in a range of from 400 nm to 700 nm is 0.5 or lower; and a ratio (Dmax/Dmin) of the maximum absorbance (Dmax) to a minimum absorbance (Dmin) in the range of from 400 nm to 700 nm is 10 or lower.

The Dmax/Dmin ratio is preferably 8 or lower, more preferably 6 or lower, even more preferably 5 or lower, still more preferably 4 or lower, and most preferably 3 or lower. When an absorbance at the spectral absorption maximum wavelength in the range of from 750 nm to 1,050 nm is designated as 1, the maximum absorbance (Dmax) in the range of from 400 nm to 700 nm is 0.5 or lower, preferably 0.4 or lower, more preferably 0.3 or lower, and most preferably 0.2 or lower.

A printing ink using the infrared dye composition of the present invention contains a binder resin or a vehicle, a plasticizer, a solvent, etc.

The vehicle can be composed of, for example, resins [phenol resins (phenol resins, rosin-modified phenol resins using rosins, such as rosin, hardened rosin, and polymerized rosin, etc.), maleic acid resins (rosin-modified maleic acid resins, rosin ester resins, etc.), alkyd resins or modified alkyd resins, petroleum resins, etc.]; oils and fats [dry oil or semi-dry oil (linseed oil, polymerized linseed oil, tung oil, soybean oil, etc.), synthetic dry oil (dehydrated castor oil, maleic oil, etc.), etc.]; solvents having a high boiling point (petroleum solvents having a boiling point in a range of from about 260°C to about 350°C, such as mineral oil); etc.

Furthermore, to the vehicle, a plasticizer for allowing flexibility and strength stability to a printing film, a solvent for adjusting viscosity and giving drying properties, and auxiliary agents for dryness, viscosity, and dispersibility, such as various reaction agents, can be suitably added as required. Moreover, a dye mixture may be added while maintaining its powder form, and it is also preferable to add a dye mixture while being dissolved in an appropriate solvent.

Moreover, a photo-polymerization curable ink or an electron beam curable ink may be used. A main component of a cured product of these inks is an acrylic resin. Therefore, the above-mentioned inks contain an alkyl monomer. An ink containing these resins or monomers is solvent free, and causes a continuous polymerization reaction to be cured by electromagnetic waves or electron beam irradiation. Among the above, to a UV-light irradiation type ink, a photo-polymerization initiator and, as required, a sensitizer and an auxiliary agent, such as a polymerization inhibitor or a chain transfer agent, can be suitably added. An electron beam curable ink can be obtained using a resin or a monomer similar to that in the UV-light irradiation type ink without requiring a photo-polymerization initiator, and adding various auxiliary additives as required.

There is no particular limitation on a printing method using a printing ink containing the infrared dye composition of the present invention. Such printing is, for example, typography printing, offset printing, flexo printing, gravure printing, or silk printing, and can be achieved using a generally-used printing machine.

An ink jet ink containing the infrared dye composition of the present invention is composed of water or a water-soluble organic solvent, a dispersant, and a dye mixture of the present invention, and, as required, a coloring material, and various additives.

An ink composition containing the infrared dye composition of the present invention preferably includes water and a water-soluble organic solvent, and more preferably includes a wetting agent containing an organic solvent having a high boiling point. The addition amount of the wetting agent is preferably from 2% by weight to 30% by weight, and more preferably from 5% by weight to 20% by weight, with respect to the amount of ink. In addition, a surfactant, sugar, a pH adjusting agent, an anti-corrosive agent, an antiseptic agent, an antifungal agent, a phosphorus antioxidant, a sequestering agent, etc., can be added as required.

An ink jet ink containing the infrared dye composition of the present invention can be produced by dissolving or dispersing and mixing the above-mentioned components by an appropriate method. First, a dye mixture, a high-molecular dispersant, and water are mixed using an appropriate dispersing machine (e.g., a ball mill, a sand mill, an attritor, a roll mill, an agitator mill, a Henschel Mixer, a colloid mill, an ultrasonic homogenizer, a jet mill, an Ong Mill, etc.), to prepare a uniform dispersion. Subsequently, water, a sequestering agent, an osmotic solvent, a surfactant, a water-soluble organic solvent, sugar, a pH adjusting agent, an antiseptic agent, an antifungal agent, etc., are added to the uniform dispersion, and mixed sufficiently to thereby prepare an ink solution. After sufficiently stirring, the resultant is filtered so as to remove coarse particles and foreign substances causing clogging to obtain a target ink jet ink.

An electrophotographic toner containing the infrared dye composition of the present invention contains infrared ray absorbing particles whose surfaces have been coated with a near-infrared ray absorbing material. As the near-infrared ray absorbing material, the dye mixture of the present invention can be used.

An electrophotographic toner containing the infrared dye composition of the present invention contains a binder resin. As the binder resin, the following materials can be used, for example. However, the present invention is not limited to the following materials.

Examples of the binder resin include homopolymers or copolymers of styrenes, such as styrene or chlorostyrene; monoolefins, such as ethylene, propylene, butylene, or isoprene; vinyl esters, such as vinyl acetate, vinyl propionate, vinyl benzoate, or vinyl acetate; $\alpha$-methylene aliphatic monocarboxylic acid esters, such as methyl acrylate, ethyl acrylate, butyl acrylate, dodecyl acrylate, octyl acrylate, phenyl acrylate, methyl methacrylate, ethyl methacrylate, butyl methacrylate, or dodecyl methacrylate; vinyl ethers, such as vinyl methyl ether, vinyl ethyl ether, or vinyl butyl ether; or vinyl ketones, such as vinyl methyl ketone, vinyl hexyl ketone, or vinyl isopropenyl ketone.

Examples of an especially typical binder resin include polystyrene, a styrene- alkyl acrylate copolymer, a

styrene-alkyl methacrylate copolymer, a styrene-acrylonitrile copolymer, a styrene-butadiene copolymer, a styrene-maleic anhydride copolymer, polyethylene, and polypropylene. Furthermore, polyester, polyurethane, an epoxy resin, a silicone resin, polyamide, modified rosin, paraffin, and waxes are mentioned.

In an embodiment of the invention, particle surfaces are coated with a near-infrared ray absorbing material. As particles to be coated with a near-infrared ray absorbing material, optically (under visible lights) white or transparent particles are preferable. There is no particular limitation on the white or transparent particles insofar as materials thereof look white because all visible lights are reflected or are transparent to visible lights. Known material particles, such as inorganic particles, thermoplastic resin particles, and thermosetting resin particles, can be used.

By incorporating, in a toner, fine particles which are obtained by coating the near-infrared ray absorbing material on the surfaces of the optically (under visible lights) white or transparent particles, the near-infrared ray absorbing material can be more uniformly dispersed in the toner in a smaller amount.

A production method of thin-layer coating on particle surfaces with a near-infrared ray absorbing material will be described.

Specific examples of a resin used for thin- layer coating include polyolefin resins, such as polyethylene or polypropylene; polyvinyl resins and polyvinylidene resins, such as polystyrene, an acrylic resin, polyacrylonitrile, polyvinyl acetate, polyvinyl alcohol, polyvinyl butyral, polyvinyl chloride, polyvinyl carbazole, polyvinyl ether, or polyvinyl ketone; vinyl chloride-vinyl acetate copolymers; styrene-acrylic acid copolymers; straight silicone resins containing organosiloxane bond or modified articles thereof; fluorocarbon resins, such as polytetrafluoroethylene, polyvinyl fluoride, polyvinylidene fluoride, or polychlorotrifluoroethylene; polyesters; and polycarbonates. By using a crosslinking component, such as divinylbenzene, simultaneously with resin formation, hardened resin particles can be produced.

Examples of a thermosetting resin include phenol resins; amino resins, such as urea-formaldehyde resins, melamine resins, benzoguanamine resins, urea resins, polyamide resins, and epoxy resins.

Examples of inorganic particles include particles of silica, alumina, titania, zinc oxide, strontium titanate, cerium oxide, or calcium carbonate; and silica particles having a high transparency are preferable.

There is no particular limitation on surface treatment method, and a liquid phase treatment or a vapor phase treatment may be employed. For example, in a liquid phase treatment, surface treatment is carried out by putting a near-infrared ray absorbing material and particles to be treated in a solvent which can solve the near-infrared ray absorbing material, stirring and mixing the mixture, thereafter removing the solvent, and drying and pulverizing the resultant. Moreover, in a vapor phase treatment, a spray-drying method involving spraying a solvent in which a near-infrared ray absorbing material has been dissolved to floating particles so that the near-infrared ray absorbing material is adhered to the particle surfaces, and drying the resultant; and a mechanical method involving mixing a near-infrared ray absorbing material and particles to be treated, and applying mechanical share stress for stretching and sticking the near-infrared ray absorbing material on the surface of the particles to be treated are mentioned. However, in the liquid phase treatment and the spray-drying method, formation of agglomerated particles is not avoided and a large amount of solvent is used. Therefore, the mechanical method is preferable, considering the environment.

Hereinafter, a surface treatment method by the mechanical method will be described in detail.

Particles whose surfaces have been treated with a near-infrared ray absorbing material in the embodiment of the invention can be obtained by mixing particles to be treated and alkoxysilane or polysiloxane, coating the surfaces of the particles to be treated with alkoxysilane or polysiloxane (pretreatment), and then mixing the particles to be treated, which have been coated with alkoxysilane or polysiloxane, and a near-infrared ray absorbing material. As the mechanical method, known methods, such as a method using a hybridizer, can be used. For uniform surface treatment, it is preferable to pre-treat the particles to be treated before performing stretching and sticking of the near-infrared ray absorbing material. According to this method, the particle surfaces can be uniformly treated with the near-infrared ray absorbing material.

Here, in the case of using the above treatment method, it is preferable that the particles to be treated be inorganic oxide fine powder which is easy to pretreatment.

Coating of the inorganic oxide fine powder with alkoxysilane or polysiloxane may be carried out by mechanically mixing and stirring inorganic oxide fine powder and alkoxysilane or polysiloxane, or by mechanically mixing and stirring inorganic oxide fine powder while spraying alkoxysilane or polysiloxane to the inorganic oxide fine powder. Almost all of the added alkoxysilane or polysiloxane is coated on the particle surfaces of the inorganic oxide fine powder.

It should be noted that the coated alkoxysilane may be coated in the form of an organosilane compound generated from alkoxysilanes, in which the organosilane compound is generated from a part of alkoxysilane while undergoing the coating process.

Also in this case, there is no influence on the following adhesion of the near-infrared ray absorbing material.

As a device for stirring and mixing inorganic oxide fine powder and alkoxysilane or polysiloxane or stirring and mixing the infrared ray absorbing material and inorganic oxide fine powder whose particle surfaces have been coated with an organosilane compound generated from alkoxysilane or polysiloxane, an apparatus capable of applying shearing force to a powder layer is preferable. In particular, an apparatus capable of simultaneously shearing, squeezing with a spatula, and compressing is preferable. For example, a wheel-type kneader, a ball-type kneader, a blade-type kneader,

or a roll-type kneader, can be used. In the practice of the present invention, a wheel-type kneader can be more effectively used. Specific examples of the wheel-type kneader include an edge runner (same as a "mix muller", a "Simpson mill", and a "sand mill"), a multi-mill, a Stotts mill, a wet pan mill, a connor mill, and a ring muller. Among the above, an edge runner, a multi-mill, a Stotts mill, a wet pan mill, and a ring muller are preferable, with an edge runner being more preferable. Specific examples of the ball-type kneader include a vibration mill. Specific examples of the blade-type kneader include a Henschel mixer, a planetary mixer, and a Nauta mixer. Specific examples of the roll-type kneader include an extruder.

The conditions at the time of stirring and mixing are determined so that alkoxysilane or polysiloxane might be coated as uniformly as possible on the particle surfaces of inorganic oxide fine powder. More specifically, the treatment conditions may be suitably adjusted in such a manner that a line load is in a range of from 19.6 N/cm to 1,960 N/cm (from 2 kg/cm to 200 kg/cm), preferably from 98 N/cm to 1.470 N/cm (from 10 kg/cm to 150 kg/cm), and more preferably from 147 N/cm to 980 N/cm (from 15 kg/cm to 100 kg/cm) and a treatment time is in a range of from 5 minutes to 120 minutes, and preferably from 10 minutes to 90 minutes. It should be noted that the treatment conditions may be suitably adjusted in such a manner that a stirring rate is in a range of from 2 rpm to 2,000 rpm, preferably from 5 rpm to 1,000 rpm, and more preferably from 10 rpm to 800 rpm.

The addition amount of alkoxysilane or polysiloxane is preferably from 0.15 part by weight to 45 parts by weight based on 100 parts by weight of inorganic oxide fine powder. In the case where the addition amount is lower than 0.15 part by weight, it is difficult to adhere a near-infrared ray absorbing material in such a manner as to provide target inorganic oxide fine powder whose surfaces have been uniformly coated with the near-infrared ray absorbing material. When the addition amount is from 0.15 part by weight to 45 parts by weight, the infrared ray absorbing material in an amount of from 3 parts by weight to 30 parts by weight can adhere to 100 parts by weight of inorganic oxide fine powder. Thus, it is meaningless to add alkoxysilane or polysiloxane more than necessary in the amount exceeding 45 parts by weight.

Subsequently, a near-infrared ray absorbing material is added to the inorganic oxide fine powder which has been coated with alkoxysilane or polysiloxane, and the resultant is stirred and mixed. Thereby, the near-infrared ray absorbing material is made to adhere to the alkoxysilane-coated powder or the polysiloxane-coated powder. As required, drying treatment or heating treatment may be further performed.

It is preferable to slowly, particularly over about 5 minutes to 60 minutes, add a near-infrared ray absorbing material in a small portion.

The conditions at the time of stirring and mixing are determined in such a manner that a near-infrared ray absorbing material is uniformly adhered. More specifically, the conditions may be suitably adjusted in such a manner that a line load is in a range of from 19.6 N/cm to 1,960 N/cm (from 2 kg/cm to 200 kg/cm), preferably from 98 N/cm to 1,470 N/cm (from 10 kg/cm to 150 kg/cm), and more preferably from 147 N/cm to 980 N/cm (from 15 kg/cm to 100 kg/cm) and a treatment time is in a range of from 5 minutes to 120 minutes, and preferably from 10 minutes to 90 minutes. It should be noted that the treatment conditions may be suitably adjusted in such a manner that a stirring rate is from 2 rpm to 2,000 rpm, preferably from 5 rpm to 1,000 rpm, and more preferably from 10 rpm to 800 rpm.

The addition amount of a near-infrared ray absorbing material is from 3 parts by weight to 30 parts by weight with respect to 100 parts by weight of inorganic oxide fine powder. More preferable is from 3 parts by weight to 15 parts by weight. When the addition amount of the near-infrared ray absorbing material is outside the above-mentioned range, the target inorganic oxide fine powder whose surfaces have been uniformly coated with the near-infrared ray absorbing material cannot be obtained.

A heating temperature in a drying step or a heating step is generally preferably from 40°C to 150°C, and more preferably from 60°C to 120°C. A treatment time is preferably from 10 minutes to 12 hours, and more preferably from 30 minutes to 3 hours.

Alkoxysilane used for coating inorganic oxide fine powder is finally formed into an organosilane compound generated from the alkoxysilane by undergoing these processes, and coated.

Examples of the inorganic oxide fine powder used in the present invention include powder of $SiO_2$, $TiO_2$, $Al_2O_3$, CuO, ZnO, $SnO_2$ $CeO_2$, MgO, BaO, CaO, $K_2O$, $Na_2O$, $ZrO_2$, $CaO{\cdot}SiO_2$, $K_2O\text{-}(TiO_2)n$, $Al_2O_{3\cdot2}SiO_2$, $CaCO_3$, $MgCO_3$, $BaSO_4$, and $MgSO_2$. Other known substances can also be used. As required, a substance which has been subjected to hydrophobization treatment can be used. As inorganic oxide fine powder whose surface has been coated with an infrared ray absorbing material, $SiO_2$, which has a low specific gravity and is relatively difficult to isolate from a toner, is preferable, because $SiO_2$ exceedingly exhibits effects.

Examples of a hydrophobization agent which can be used for hydrophobization treatment include alkylchlorosilanes, such as methyltrichlorosilane, octyltrichlorosilane, and dimethyldichlorosilane; alkylmethoxysilanes, such as dimethyldimethoxysilane and octyltrimethoxysilane; hexamethyldisilazane; and silicone oil.

An average dispersion diameter of particles carrying the near-infrared ray absorbing material on the surfaces needs to be in a range of 0.5 μm or lower. When the average dispersion diameter is in the above-mentioned range, scattering of particles themselves is reduced to increase transparency.

The "average dispersion diameter" as used herein refers to an average particle diameter of each near-infrared ray absorbing material dispersed in a toner. The average dispersion diameter is determined from a value obtained by averaging particle diameters of 1000 particles of particulate near-infrared ray absorbing material dispersed in a toner, in which the particle diameters have been calculated based on each cross sectional area by observation under TEM (Transmittance Electron Microscope: trade name JEM-1010, manufactured by JEOL Datum).

When an electrophotographic toner is an invisible toner, the invisible toner may contain, in addition to a binder resin, the above-described near-infrared absorbing material, and a fluorescent brightening agent, at least one of wax for adjusting fixation property, an electrification control agent for adjusting electrification, etc., as an internal additive which is incorporated and dispersed in a toner for use.

Examples of the wax include paraffin wax and its derivatives, montan wax and derivatives thereof, microcrystalline wax and derivatives thereof, Fischer Tropsch wax and derivatives thereof, polyolefin wax and derivatives thereof. Examples of the derivatives include oxides, polymers with a vinyl monomer, and graft modified substances. In addition to the above, alcohol, fatty acid, vegetable wax, animal wax, mineral wax, ester wax, acid amide, etc., can be used.

The addition amount of wax with respect to the amount of the invisible toner is preferably from 1% by weight to 10% by weight, and more preferably from 3% by weight to 10% by weight. When the addition amount of wax is smaller than 1% by weight, sufficient fixation latitude (temperature range of a fixing roll where fixation can be carried out without offset of a toner) cannot be obtained. In contrast, when the addition amount is larger than 10% by weight, dispersion uniformity of a near-infrared ray absorbing material is impaired. Moreover, powder fluidity of a toner is deteriorated and free wax is adhered to the surface of a photoconductor forming an electrostatic latent image, which makes it impossible to accurately form an electrostatic latent image.

Furthermore, in order to further increase a long-term storability, fluidity, development performance and transfer properties of an invisible toner, inorganic powder or resin powder can be used singly or in combination as an additive.

Examples of the inorganic powder include carbon black, silica, alumina, titania, and zinc oxide. Examples of resin powder include spherical particles of PMMA. nylon, melamine, benzoguanamine, or fluorocarbon-resin; and amorphous powder of vinylidene chloride or fatty acid metal salt. The addition amount of these additives is preferably in a range of from 0.2% by weight to 4% by weight, and more preferably in a range of from 0.5% by weight to 3% by weight with respect to the amount of the invisible toner particles.

As a method of adding the above-mentioned internal additives to the inside of invisible toner particles, known methods can be used, and particularly thermally melting and kneading treatment is preferably employed. Kneading in such a case can be carried out using various heating kneaders. Examples of the heating kneader include a three-roll kneader, a uniaxial screw kneader, a biaxial screw kneader, and a Banbury mixer kneader.

There is no particular limitation on methods of producing invisible toner particles, and known methods can be used for the production thereof. When invisible toner particles are produced by pulverization of the above-mentioned kneaded material, pulverization thereof can be achieved using a micronizer, ULMAX, a JET-O-mizer, KTM (krypton), a turbo midget, etc. Furthermore, by applying mechanical external force, as a post process thereof, using a hybridization system (manufactured by NARA MACHINERY CO.,LTD.), a mechano fusion system (manufactured by Hosokawa Micron CORP.), a kryptron system (manufactured by Kawasaki Heavy Industries, Ltd.), etc., the toner shape after pulverization can be changed. Moreover, conglobation by hot air can also be mentioned. Furthermore, classifying treatment may be performed to thereby adjust a toner particle size distribution.

Moreover, a toner can be also produced by a so-called polymerization method, typically an emulsion polymerization agglomeration method using emulsified fine particles. In particular, as a method of intentionally controlling a toner shape and a surface structure, methods of producing a toner by emulsion polymerization agglomeration methods described in Japanese Patent No. 2547016 and JP-A No. 6-250439 have been proposed in recent years. Since, in the emulsion polymerization agglomeration method, an atomized raw material having a size of 1 micron or lower is generally used as a starting material, a toner having a small diameter can be efficiently produced theoretically. The production method generally involves producing a resin dispersion by emulsion polymerization or the like, producing a colorant dispersion in which a colorant has been dispersed in a solvent, mixing the resin dispersion and the colorant dispersion, forming agglomerated particles having a diameter equivalent to a toner particle diameter, and then uniting the agglomerated particles by heating to form a toner. In usual, according to the methods, it is difficult to intentionally control a surface composition because the toner surface and the inside have a similar composition. Then, in order to address the problem, a means for achieving a more precise particle structure control by performing free control, ranging from an internal layer to a surface layer, also in a toner in an emulsion polymerization agglomeration method described in Japanese Patent No. 3141783 has been proposed. Therefore, precise control of particle structure as well as easy reduction in toner particle diameter has been realized.

A volume average particle diameter of an invisible toner is preferably in a range of from 3 μm to 15 μm, and more preferably from 5 μm to 12 μm. When the volume average particle diameter is lower than 3 μm, the electrostatic adhesion becomes larger than gravity, sometimes resulting in difficulty in handling as powder. In contrast, when the volume average particle diameter is larger than 15 μm, high definition recording of invisible information may be difficult.

An electrophotographic developing agent in an embodiment of the present invention contains a carrier and an electrophotographic toner. It is preferable that the electrophotographic toner be an electrophotographic toner of the present invention.

The electrophotographic developing agent in the embodiment of the invention can be obtained by mixing a carrier and the electrophotographic toner of the present invention according to known methods. Moreover, it is preferable that the electrophotographic developing agent according to the present invention be a two-component developing agent obtained by mixing the electrophotographic toner which is nonmagnetic and a carrier having magnetism.

The invisible toner concentration (TC) in a developing agent is preferably in a range of from 3% by weight to 15% by weight, and more preferably in a range of from 5% by weight to 12% by weight. It should be noted that the invisible toner concentration (TC) is expressed by the following equation.

$$\text{TC (\% by weight)} = [\text{Weight of invisible toner contained in developing agent (g)/Total weight of developing agent (g)}] \times 100$$

When the charge amount of an invisible toner at the time when a developing agent is produced by mixing the invisible toner and a carrier is excessively high, adhesion of the toner to the carrier becomes excessively strong, which may create a phenomenon that an invisible toner is not developed. In contrast, when the charge amount thereof is excessively low, adhesion of the invisible toner to the carrier becomes to weaken, resulting in occurrence of a toner cloud due to a free toner, and then fogging at the time of image formation may pose a problem.

Therefore, from the viewpoint of performing favorable development, the charge amount of the invisible toner in a developing agent is preferably in a range of from 5 $\mu$C/g to 80 $\mu$C/g, and more preferably from 10 $\mu$C/g to 60 $\mu$C/g in terms of an absolute value.

In a method of forming an image in the present invention, a) only an invisible image is provided on the surface of an image output medium, b) an invisible image and a visible image are successively laminated on the surface of an image output medium, or c) an invisible image and a visible image are provided in different areas on the surface of an image output medium; at least one image selected from a), b), and c) is provided; and at least one of the invisible images of a), b), and c) is composed of a two dimensional pattern. In the method, it is preferable that the invisible image be composed of the electrophotographic toner of the present invention.

The "invisible image" in the embodiment of the present invention refers to an image which can be recognized by a reader, such as a CCD, in the infrared region and cannot be visually recognized (i.e., invisible) in the visible light region because an invisible toner forming an invisible image does not have color-forming properties due to absorption of a specific wavelength in the visible light region.

The "visible image" in the embodiment of the present invention refers to an image which cannot be recognized by a reader, such as a CCD, in the infrared region and can be visually recognized (i.e., visible) in the visible light region because a visible toner forming a visible image has color-forming properties due to absorption of a specific wavelength in the visible light region.

An invisible image formed by the image forming method in the embodiment of the present invention is formed using the electrophotographic toner of the invention. Therefore, a mechanical treatment of reading and decoding can be performed stably by infrared ray irradiation over a long period of time, and information can be recorded with high density. Moreover, since the invisible image does not have color-forming properties in the visible light region and is invisible, the invisible image can be formed in arbitrary regions on an image formation surface of an image output medium irrespective of whether a visible image is provided on the image formation surface.

However, in the present invention, when a visible image region and an invisible image region which have been formed on the image formation surface are partially or completely overlapped, it is preferable that the invisible image be formed between the visible image and the image output medium surface in a region where the visible image and the invisible image are formed while being overlapped. In such a case, even when the image formation surface is visually observed from the front, only the visible image can be recognized. However, when the image formation surface is visually observed from oblique angles, the existence of the invisible image can be confirmed based on gloss differences between a region where the invisible image has been formed and the other regions without impairing quality of the visible image.

In contrast, when the invisible image is formed on the visible image surface formed in the image output medium surface, visible lights are blocked by the invisible image, which may hinder color formation of the visible image, resulting in the formation of image defects.

By forming the invisible image between the image output medium surface and the visible image, the invisible image is protected by the visible image. Therefore, the invisible image is difficult to deteriorate due to abrasion or the like of the image formation surface of the image output medium on which the visible image and the invisible image have

been formed. Therefore, the mechanical treatment of reading and decoding can be stably performed by infrared ray irradiation over a longer period of time.

In confidential documents, valuable papers, etc., having a high possibility of suffering serious disadvantages due to circulation of forged materials, excellent forgery prevention effects can be obtained. This is because information recorded as an invisible image in order to identify truth or falsehood is protected by a visible image, and thus it is very difficult to remove or rewrite the information.

In the image forming method in the embodiment of the invention, it is preferable that a visible image is composed of a toner of at least any one of yellow color, magenta color and cyan color, which has an absorption of 5% or lower in the near-infrared region.

In the present invention, when an electrophotographic method is employed also for visible image formation, known toners can be used as a toner used for visible image formation. From the viewpoint of securing reading accuracy of invisible information, it is preferable to use a toner of yellow color, magenta color, or cyan color having an absorbance in the near-infrared region (near-infrared ray absorbance) of 5% or lower (hereinafter sometimes referred to as a "visible toner").

It should be noted that the visible toner may be any colors other than yellow, magenta, and cyan color and may be a toner of a desired color, such as red, blue, or green. It is preferable for the visible toners of any colors to have a near-infrared ray absorbance of 5% or lower.

When the near-infrared ray absorbance of a visible toner is 5% or more, a visible image may also be taken as an invisible image in the case where an image formation surface, on an image output medium surface, where an invisible image and a visible image have been formed, is mechanically read by infrared ray irradiation In particular, when mechanical reading is performed without specifying a region, on the image formation surface, where an invisible image has been formed or when an invisible image is formed between a visible image and the image output medium surface, it may become difficult to read only information of the invisible image and accurately decode the same.

The near-infrared ray absorbance of the visible toner can be obtained according to the following equation by determining a spectral reflectance (VT(i)) of a visible image formed with the visible toner in the near-infrared region and a spectral reflectance M(i) of an image output medium using a spectral reflectance meter (a spectrophotometer "U-4100", manufactured by Hitachi) similarly to the case of the invisible toner described above.

Near-infrared ray absorbance of visible toner = VT(i) - M(i)

Typical examples of a colorant used for obtaining the above-described visible toner include aniline blue, chalco oil blue, chrome yellow, ultramarine blue, Dupont Oil Red, quinoline yellow, methylene blue chloride, phthalocyanine blue, malachite green oxalate, lamp black, rose bengal, C. I. Pigment Red 48: 1, C.I. Pigment Red 122, C.I. Pigment Red 57:1, C.I. Pigment Yellow 97, C.I. Pigment Yellow 12, C.I. Pigment Blue 15:1, and C.I. Pigment Blue 15:3.

It is preferable that other constituent requirements of the toner for visible image formation be similar to the previously-described requirements in the invisible toner, except for a near-infrared ray absorbing material and the absorbance properties.

In order to increase reading accuracy of an invisible image, the near-infrared ray absorbance of an invisible toner for forming an invisible image is larger than the near-infrared ray absorbance of a visible toner for forming a visible image by preferably 15% or more, and more preferably 30% or more.

When a difference in the near-infrared ray absorbance between an invisible image and a visible image is lower than 15%, it sometimes becomes difficult to recognize and read only the invisible image by binary processing while defining a fixed contrast (threshold) as a boundary so as to read an image while identifying whether the image is an invisible image at the time of mechanically reading in a region having an absorbance between the near-infrared ray absorbance of the invisible image and the near-infrared light absorbance of the visible image. More specifically, in such a case, there is a possibility that the visible image may hinder reading of the invisible image and accurate decoding of information recorded on the invisible image.

It should be noted that a difference in near-infrared ray absorbance between an invisible toner for forming an invisible image and a visible toner for forming a visible image (hereinafter sometimes referred to as "near-infrared ray absorbance difference") is determined according to the following equation by determining a spectral reflectance (IP(i)) of an invisible image (solid image) formed on an image output medium surface and a spectral reflectance VP(i) of a visible image (solid image) formed on an image output medium surface using a spectral reflectance meter ("U-4100" spectrophotometer, manufactured by Hitachi).

$$\text{Difference in near-infrared ray absorbance} = IP(i) - VP(i)$$

(Application of present invention)

The infrared dye composition of the present invention is preferably used as infrared ray absorbing recording materials, such as an infrared ray absorbing printing ink, an infrared ray absorbing ink jet ink, or an electrophotographic toner; infrared ray absorbing compositions for use in optoelectronics products, such as a near-infrared ray absorbing filter for use in a plasma display; and infrared ray absorbing inks using the same.

EXAMPLES

Hereinafter, the present invention will be described in more detail with reference to Examples, but is not limited thereto.

(Example 1)

To 18 mg of a dye mixture in which compound (I) (compound No. 1-4), compound (II-1) (Plast Blue DB-367, manufactured by Arimoto Chemical Co., Ltd., C. I. Disperse Blue 60), and compound (II-2) (KP Plast Violet R, manufactured by Kiwa Chemical Industry Co., Ltd., C.I. Disperse Violet 28) were mixed so that the weight ratio of compound (I)/compound. (II-1)/compound (II-2) would be 10/4/4, and then toluene was added so that the volume would reach 50 mL for dissolution. Further, to 1 mL of the obtained solution, toluene was added to reach 40 mL, whereby an infrared dye composition of the present invention was obtained. The spectral absorption spectrum of the obtained infrared dye composition was measured using a spectrophotometer (U-4100 spectrophotometer, manufactured by Hitachi High-Technologies Corp.). Results are shown in Fig. 1.

The infrared dye composition had an absorption maximum at 846 nm. When the absorbance at the absorption maximum wavelength was designated as 1, the maximum absorbance (Dmax) in a range of from 400 nm to 700 nm was 0.12. A value (Dmax/Dmin) obtained by dividing the maximum absorbance (Dmax) by the minimum absorbance (Dmin) in the range of from 400 nm to 700 nm was 2.4.

It should be noted that when the spectral absorption spectrum of a toluene solution of each of the compound No. 1-4, the compound (II-1), and the compound (II-2) was measured, the toluene solutions of each of the compound No. I-4, the compound (II-1) and the compound (II-2) had an absorption maximum at 848 nm, 674 nm, and 552 nm, respectively.

(Example 2)

To 13 mg of a dye mixture in which compound 1-4, compound (II-1) (Plast Blue DB-367, manufactured by Arimoto Chemical Co., Ltd., C. I. Disperse Blue 60), and compound (II-2) (KP Plast Violet R, manufactured by Kiwa Chemical Industry Co., Ltd., C.I. Disperse Violet 28) were mixed so that the weight ratio of compound I-4/compound (II-1)/compound (II-2) would be 30/4/4, toluene was added so that the volume would reach 50 mL for dissolution. Further, to 1 mL of the obtained solution, toluene was added to reach 40 mL, whereby an infrared dye composition was obtained. The spectral absorption spectrum of the obtained infrared dye composition was measured using a spectrophotometer (U-4100 spectrophotometer, manufactured by Hitachi High-Technologies Corp.).

The obtained results are shown in Fig. 2. The infrared dye composition has an absorption maximum at 846 nm. When the absorbance at the absorption maximum wavelength was designated as 1, the maximum absorbance (Dmax) in the range of from 400 nm to 700 nm was 0.12. A value (Dmax/Dmin) obtained by dividing the maximum absorbance (Dmax) by the minimum absorbance (Dmin) in the range of from 400 nm to 700 nm was 3.5.

(Example 3)

An infrared dye composition which is obtained by dissolving 0.3 part by weight of the dye mixture of Example 1 in 20 parts by weight of a mixed solvent of ethyl acetate and methyl ethyl ketone in which the ratio of ethyl acetate/methyl ethyl ketone was 1/1, 15 parts by weight of calcium carbonate, 25 parts by weight of rosin-modified phenol resin ("Tamanol 350", manufactured by Arakawa Kagaku Kogyo Co., Ltd.), 23 parts by weight of soybean oil, 25 parts by weight of mineral oil, 2 parts by weight of manganese octylate, and 5 parts by weight of auxiliary agents were kneaded to thereby prepare an offset printing ink. Coating was performed with a blade (25 μm) on an art paper (Tokuhishi art) using the printing ink. The reflectance of the coating surface was measured using a U-4100 spectrophotometer manufactured by Hitachi High-Technologies Corp. The obtained results are shown in Fig. 3. When visually observed, the color was gray.

(Example 4)

An infrared dye composition which is obtained by dissolving 0.3 part by weight of the dye mixture of Example 2 in 20 parts by weight of a mixed solvent of ethyl acetate and methyl ethyl ketone in which the ratio of ethyl acetate/methyl ethyl ketone was 1/1, 15 parts by weight of calcium carbonate, 25 parts by weight of rosin-modified phenol resin ("Tamanol 350", manufactured by Arakawa Kagaku Kogyo Co., Ltd.), 23 parts by weight of soybean oil, 25 parts by weight of mineral oil, 2 parts by weight of manganese octylate, and 5 parts by weight of auxiliary agents were kneaded to thereby prepare an offset printing ink. Coating was performed with a blade (25 μm) on an art paper (Tokuhishi art) using the printing ink. The reflectance of the coating surface was measured using a U-4100 spectrophotometer manufactured by Hitachi High-Technologies Corp. The obtained results are shown in Fig. 4. When visually observed, the color was gray.

(Example 5)

A test was performed in a similar manner to that in Examples described in JP-A No. 2005-221892, except using the dye mixture of Example 1 of the present invention in place of imonium salt (trade name: CIP-1080, manufactured by Japan Carlit Co., Ltd.) in production of an invisible toner in Examples described in JP-A No. 2005-221892, and then favorable results were obtained.

(Example 6)

An ink composition was prepared in a similar manner to that in Example B described in JP-A No. 2005-126725, except using the dye mixture of Example 1 of the present invention in place of a dye used in Example B described in JP-A No. 2005-126725. Then, a test was similarly performed, except using the ink composition in place of an ink jet recording ink used in Example 3 described in JP-A No. 2002-146254, and then favorable results were obtained.

(Comparative Example 1)

A comparative infrared dye composition was prepared in a similar manner to the process in the preparation of the infrared dye composition of Example 1, except that 5.6 mg of compound (I-4) was used in place of 18 mg of the dye mixture. The spectral absorption of the obtained comparative infrared dye composition was measured in a similar manner to that in Example 1. Results are shown in Fig. 5. The comparative infrared dye composition had an absorption maximum at 848 nm, and when the absorbance at the absorption maximum wavelength was designated as 1, the maximum absorbance (Dmax) in the range of from 400 nm to 700 nm was 0.11. A value (Dmax/Dmin) obtained by dividing the maximum absorbance (Dmax) by the minimum absorbance (Dmin) in the range of from 400 nm to 700 nm was 18.

(Comparative Example 2)

Using a three-roll mill, an offset-printing ink (dry offset ink) containing 0.3 part by weight of compound (I-4), 15 parts by weight of calcium carbonate, 25 parts by weight of rosin-modified phenol resin ("Tamanol 350", manufactured by Arakawa Kagaku Kogyo Co., Ltd.), 23 parts by weight of soybean oil, 25 parts by weight of mineral oil, 2 parts by weight of manganese octylate, and 5 parts by weight of auxiliary agents was prepared. Coating was performed with a blade (25 μm) on an art paper (Tokuhishi art) using the printing ink. The reflectance of the coating surface was measured using a U-4100 spectrophotometer manufactured by Hitachi High-Technologies Corp. The obtained results are shown in Fig. 6. When visually observed, the paper was colored orange.

As described above, the infrared dye composition of the present invention has an absorption maximum wavelength in a range of from 750 nm to 1050 nm. Concerning the infrared dye composition of the present invention, when an absorbance at the absorption maximum wavelength is designated as 1, a maximum absorbance in the range of from 400 nm to 700 nm is 0.5 or lower. Moreover, a value (Dmax/Dmin) obtained by dividing the maximum absorbance (Dmax) by the minimum absorbance (Dmin) in the range of from 400 nm to 700 nm is 10 or lower. Each color of printed substances using a printing ink or an ink jet recording ink each containing the infrared dye composition of the present invention is gray when visually observed. In contrast, with respect to the comparative sample, the Dmax/Dmin value is as high as 18, which exceeds 10. The printed substance using the comparative sample is colored orange, which is far from an invisible ink.

## Claims

1. An infrared dye composition comprising at least:

a compound (I) whose spectral absorption maximum wavelength in a range of from 400 nm to 1,050 nm is in a range of from 750 nm to 1,050 nm; and
two or more compounds (II) whose spectral absorption maximum wavelength in a range of from 400 nm to 1,050 nm is in a range of from 400 nm to 700 nm, wherein
when an absorbance of the infrared dye composition at a spectral absorption maximum wavelength in the range of from 750 nm to 1,050 nm is designated as 1, a maximum absorbance (Dmax) of the infrared dye composition in the range of from 400 nm to 700 nm is 0.5 or lower, and a ratio (Dmax/Dmin) of the maximum absorbance (Dmax) to a minimum absorbance (Dmin) of the infrared dye composition in the range of from 400 nm to 700 nm is 10 or lower.

2. An infrared dye composition comprising at least:

a compound (I) whose spectral absorption maximum wavelength in a range of from 400 nm to 1,050 nm is in a range of from 750 nm to 1,050 nm; wherein the compound (I) comprises a naphthalocyanine dye or a diimonium compound; and
a compound (II) whose spectral absorption maximum wavelength in a range of from 400 nm to 1,050 nm is in a range of from 400 nm to 700 nm, wherein
when an absorbance of the infrared dye composition at a spectral absorption maximum wavelength in the range of from 750 nm to 1,050 nm is designated as 1, a maximum absorbance (Dmax) of the infrared dye composition in the range of from 400 nm to 700 nm is 0.5 or lower, and a ratio (Dmax/Dmin) of the maximum absorbance (Dmax) to a minimum absorbance (Dmin) of the infrared dye composition in the range of from 400 nm to 700 nm is 10 or lower.

3. The infrared dye composition according to claim 1 or 2, wherein the Dmax/Dmin ratio is 4 or lower.

4. The infrared dye composition according to claim 1 or 2, wherein the maximum absorbance (Dmax) is 0.2 or lower.

5. The infrared dye composition according to claim 2, wherein the naphthalocyanine dye is represented by the following formula (I-a):

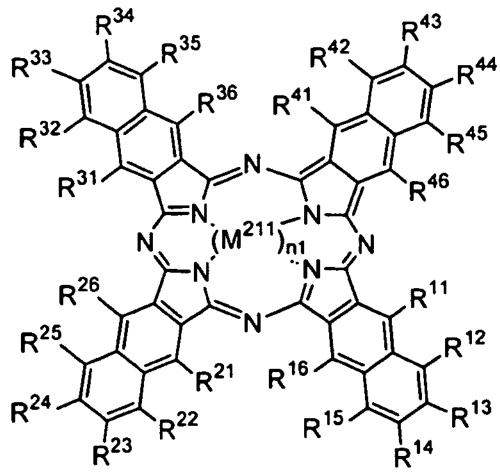

Formula (I-a)

wherein in formula (I-a), $R^{11}$, $R^{12}$, $R^{13}$, $R^{14}$, $R^{15}$, $R^{16}$, $R^{21}$, $R^{22}$, $R^{23}$, $R^{24}$, $R^{25}$, $R^{26}$, $R^{31}$, $R^{32}$, $R^{33}$, $R^{34}$, $R^{35}$, $R^{36}$, $R^{41}$, $R^{42}$, $R^{43}$, $R^{44}$, $R^{45}$, and $R^{46}$ each independently represent a hydrogen atom or a substituent selected from the group consisting of a halogen atom, an alkyl group, an alkenyl group, an alkynyl group, an aryl group, a cyano group,

a hydroxy group, a nitro group, a carboxy group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkylsulfonylamino group, an arylsulfonylamino group, a mercapto group, an alkylthio group, an arylthio group, a heterocyclic thio group, a sulfamoyl group, a sulfo group, an alkylsulfinyl group, an arylsulfinyl group, an alkylsulfonyl group, an arylsulfonyl group, an acyl group, an aryloxycarbonyl group, an alkoxycarbonyl group, a carbamoyl group, an imido group, a phosphino group, a phosphinyl group, a phosphinyloxy group, a phosphinylamino group, and a silyl group; $M^{211}$ represents a hydrogen atom, a metal ion or a group containing a metal ion; and n1 is 1 or 2.

**6.** The infrared dye composition according to claim 2, wherein the diimonium compound is represented by the following formula (V):

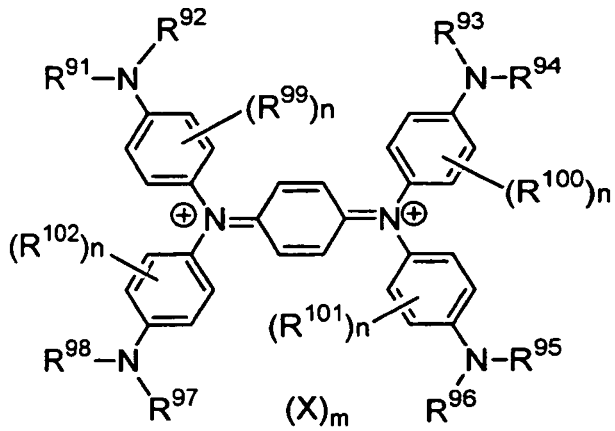

Formula (V)

wherein in formula (V), $R^{91}$, $R^{92}$, $R^{93}$, $R^{94}$, $R^{95}$, $R^{96}$, $R^{97}$, and $R^{98}$ each independently represent a hydrogen atom, an alkyl group, a cycloalkyl group, an aryl group, or an aralkyl group; $R^{99}$, $R^{100}$, $R^{101}$, and $R^{102}$ each independently represent an alkyl group, an alkoxy group, an aryloxy group, a halogen atom, an alkoxycarbonyl group, an amino group, an alkyl-substituted amino group, an amido group, a sulfonamido group, a cyano group, a nitro group, or a carboxy group; $R^{91}$ and $R^{92}$, $R^{93}$ and $R^{94}$, $R^{95}$ and $R^{96}$, $R^{97}$ and $R^{98}$, $R^{91}$ and $R^{99}$, $R^{92}$ and $R^{99}$, $R^{93}$ and $R^{100}$, $R^{94}$ and $R^{100}$, $R^{95}$ and $R^{101}$, $R^{96}$ and $R^{101}$, $R^{97}$ and $R^{102}$, or $R^{98}$ and $R^{102}$ each independently may bond to each other to form a 5- or 6-membered ring; n is an integer of from 0 to 3; X is an anion or a cation required for neutralizing electrical charge in the molecule; and m is an integer of from 0 to 6.

**7.** The infrared dye composition according to claim 1 or 2, wherein the compound (II) is an anthraquinone compound, a thioindigo compound, or a perynone compound.

**8.** An infrared ray absorbing ink, comprising the infrared dye composition according to claim 1 or 2.

**9.** An electrophotographic toner, comprising the infrared dye composition according to claim 1 or 2.

## Patentansprüche

**1.** Infrarot-Farbstoffzusammensetzung, umfassend zumindest:

eine Verbindung (I), deren maximale Wellenlänge der spektralen Absorption im Bereich von 400 nm bis 1050 nm in einem Bereich von 750 nm bis 1050 nm liegt, und
zwei oder mehrere Verbindungen (II), deren maximale Wellenlänge der spektralen Absorption in einem Bereich von 400 nm bis 1050 nm in einem Bereich von 400 nm bis 700 nm liegt, worin

wenn eine Absorbanz der Infrarot-Farbstoffzusammensetzung bei einer maximalen Wellenlänge der spektralen Absorption in dem Bereich von 750 nm bis 1050 nm mit 1 bezeichnet wird, eine maximale Absorbanz (Dmax) der Infrarot-Farbstoffzusammensetzung im Bereich von 400 nm bis 700 nm 0,5 oder niedriger ist und ein Verhältnis (Dmax/Dmin) der maximalen Absorbanz (Dmax) zur minimalen Absorbanz (Dmin) der Infrarot-Farbstoffzusammensetzung im Bereich von 400 nm bis 700 nm 10 oder weniger ist.

**2.** Infrarot-Farbstoffzusammensetzung, umfassend zumindest:

eine Verbindung (I), deren maximale Wellenlänge der spektralen Absorption in einem Bereich von 400 nm bis 1050 nm in einem Bereich von 750 nm bis 1050 nm liegt, worin die Verbindung (I) einen Naphthalocyaninfarbstoff oder eine Diimoniumverbindung umfasst; und
eine Verbindung (II), deren maximale Wellenlänge der spektralen Absorption in einem Bereich von 400 nm bis 1050 nm in einem Bereich von 400 nm bis 700 nm liegt, worin
wenn eine Absorbanz der Infrarot-Farbstoffzusammensetzung bei einer maximalen Wellenlänge der spektralen Absorption in dem Bereich von 750 nm bis 1050 nm mit 1 bezeichnet wird, eine maximale Absorbanz (Dmax) der Infrarot-Farbstoffzusammensetzung im Bereich von 400 nm bis 700 nm 0,5 oder niedriger ist und ein Verhältnis (Dmax/Dmin) der maximalen Absorbanz (Dmax) zur minimalen Absorbanz (Dmin) der Infrarot-Farbstoffzusammensetzung im Bereich von 400 nm bis 700 nm 10 oder weniger ist.

**3.** Infrarot-Farbstoffzusammensetzung nach Anspruch 1 oder 2, worin das Verhältnis Dmax/Dmin 4 oder weniger ist.

**4.** Infrarot-Farbstoffzusammensetzung nach Anspruch 1 oder 2, worin die maximale Absorbanz (Dmax) 0,2 oder weniger ist.

**5.** Infrarot-Farbstoffzusammensetzung nach Anspruch 2, worin der Naphthalocyaninfarbstoff dargestellt ist durch die folgende Formel (I-a):

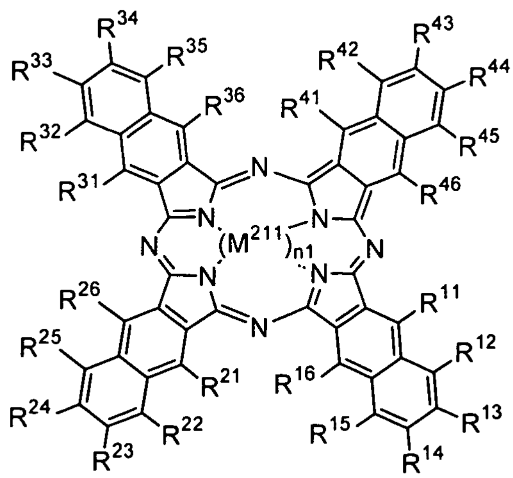

Formel (I-a)

worin in der Formel (I-a) $R^{11}$; $R^{12}$, $R^{13}$, $R^{14}$, $R^{15}$, $R^{16}$, $R^{21}$, $R^{22}$, $R^{23}$, $R^{24}$, $R^{25}$, $R^{26}$, $R^{31}$, $R^{32}$, $R^{33}$, $R^{34}$, $R^{35}$, $R^{36}$, $R^{41}$, $R^{42}$, $R^{43}$, $R^{44}$, $R^{45}$ und $R^{46}$ jeweils unabhängig ein Wasserstoffatom oder ein Substituent sind, ausgewählt aus der Gruppe bestehend aus einem Halogenatom, einer Alkyl-, Alkenyl-, Alkinyl-, Aryl-, Cyano-, Hydroxy-, Nitro-, Carboxy-, Alkoxy-, Aryloxy-, Silyloxy-, heterocyclischen Oxy-, Acyloxy-, Carbamoyloxy-, Alkoxycarbonyloxy-, Aryloxycarbonyloxy-, Amino-, Acylamino-, Aminocarbonylamino-, Alkoxycarbonylamino-, Aryloxycarbonylamino-, Sulfamoylamino-, Alkylsulfonylamino-, Arylsulfonylamino-, Mercapto-, Alkylthio-, Arylthio-, heterocyclischer Thio-, Sulfamoyl-, Sulfo-, Alkylsulfinyl-, Arylsulfinyl-, Alkylsulfonyl-, Arylsulfonyl-, Acyl-, Aryloxycarbonyl-, Alkoxycarbonyl-, Carbamoyl-, Imido-, Phosphino-, Phosphinyl-, Phosphinyloxy-, Phosphinylamino- und einer Silyl-Gruppe; $M^{211}$ ein

Wasserstoffatom, Metallion oder eine Gruppe, umfassend ein Metallion ist; und n1 1 oder 2 ist.

**6.** Infrarot-Farbstoffzusammensetzung nach Anspruch 2, worin die Diimonium-Verbindung dargestellt ist durch die folgende Formel (V):

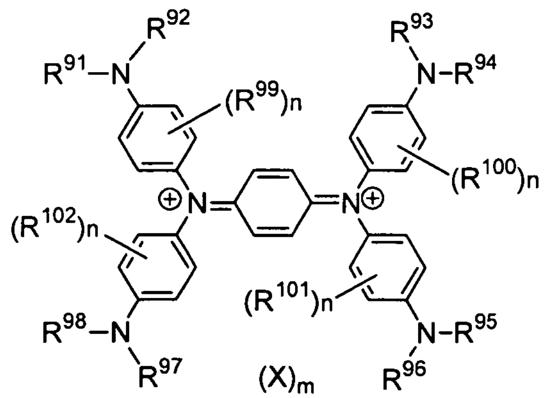

Formel (V)

worin in der Formel (V) $R^{91}$, $R^{92}$, $R^{93}$, $R^{94}$, $R^{95}$, $R^{96}$, $R^{97}$ und $R^{98}$ jeweils unabhängig ein Wasserstoffatom, eine Alkyl-, Cycloalkyl-, Aryl- oder Aralkyl-Gruppe sind; $R^{99}$, $R^{100}$, $R^{101}$ und $R^{102}$ jeweils unabhängig eine Alkyl-, Alkoxy-, Aryloxy-Gruppe, Halogenatom, eine Alkoxycarbonyl-, Amino-, Alkyl-substituierte Amino-, Amido-, Sulfonamido-, Cyano-, Nitro- oder Carboxy-Gruppe sind; $R^{91}$ und $R^{92}$, $R^{93}$ und $R^{94}$, $R^{95}$ und $R^{96}$, $R^{97}$ und $R^{98}$, $R^{91}$ und $R^{99}$, $R^{92}$ und $R^{99}$, $R^{93}$ und $R^{100}$, $R^{94}$ und $R^{100}$, $R^{95}$ und $R^{101}$, $R^{96}$ und $R^{101}$, $R^{97}$ und $R^{102}$ oder $R^{98}$ und $R^{102}$ jeweils unabhängig aneinander zur Bildung eines 5- oder 6-gliedrigen Ringes gebunden sein können; n eine ganze Zahl von 0 bis 3 ist; X ein Anion oder Kation ist, das zum Neutralisieren einer elektrischen Ladung im Molekül erforderlich ist, und m eine ganze Zahl von 0 bis 6 ist.

**7.** Infrarot-Farbstoffzusammensetzung nach Anspruch 1 oder 2, worin die Verbindung (II) eine Anthrachinon-Verbindung, Thioindigo-Verbindung oder Perynon-Verbindung ist.

**8.** Infrarotstrahlenabsorbierende Tinte, umfassend die Infrarot-Farbstoffzusammensetzung nach Anspruch 1 oder 2.

**9.** Elektrophotographischer Toner, umfassend die Infrarot-Farbstoffzusammensetzung nach Anspruch 1 oder 2.

## Revendications

**1.** Composition de teinture infrarouge comprenant au moins :

un composé (I) dont la longueur d'onde maximale d'absorption spectrale dans une plage allant de 400 nm à 1 050 nm est dans une plage allant de 750 nm à 1 050 nm ; et

deux ou plusieurs composés (II) dont la longueur d'onde maximale d'absorption spectrale dans une plage allant de 400 nm à 1 050 nm est dans une plage de 400 nm à 700 nm, dans laquelle

quand une absorbance de la composition de teinture infrarouge à une longueur d'onde maximale d'absorption spectrale dans la plage allant de 750 nm à 1 050 nm est désignée par 1, une absorbance maximale (Dmax) de la composition de teinture infrarouge dans la plage allant de 400 nm à 700 nm est de 0,5 ou moins, et un rapport (Dmax / Dmin) de l'absorbance maximale (Dmax) sur une absorbance minimale (Dmin) de la composition de teinture infrarouge dans la plage allant de 400 nm à 700 nm est de 10 ou moins.

**2.** Composition de teinture infrarouge comprenant au moins :

un composé (I) dont la longueur d'onde maximale d'absorption spectrale dans une plage allant de 400 nm à 1 050 nm est dans une plage allant de 750 nm à 1 050 nm ; dans laquelle le composé (I) comprend une teinture de naphthalocyanine ou un composé de diimonium ; et
un composé (II) dont la longueur d'onde maximale d'absorption spectrale dans une plage allant de 400 nm à 1 050 nm est dans une plage allant de 400 nm à 700 nm, dans laquelle
quand une absorbance de la composition de teinture infrarouge à une longueur d'onde maximale d'absorption spectrale dans la plage allant de 750 nm à 1 050 nm est désignée par 1, une absorbance maximale (Dmax) de la composition de teinture infrarouge dans la plage allant de 400 nm à 700 nm est de 0,5 ou moins, et un rapport (Dmax / Dmin) de l'absorbance maximale (Dmax) sur une absorbance minimale (Dmin) de la composition de teinture infrarouge dans la plage allant de 400 nm à 700 nm est de 10 ou moins.

**3.** Composition de teinture infrarouge selon la revendication 1 ou 2, dans laquelle le rapport Dmax / Dmin est de 4 ou moins.

**4.** Composition de teinture infrarouge selon la revendication 1 ou 2, dans laquelle l'absorbance maximale (Dmax) est de 0,2 ou moins.

**5.** Composition de teinture infrarouge selon la revendication 2, dans laquelle la teinture de naphthalocyanine est représentée par la formule suivante (I-a) :

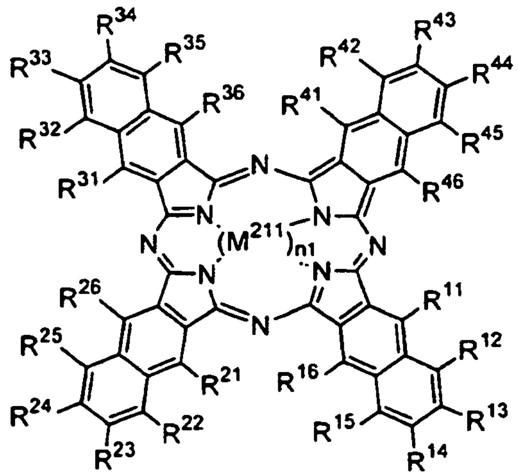

Formule (Ia)

dans laquelle, dans la formule (I-a), $R^{11}$, $R^{12}$, $R^{13}$, $R^{14}$, $R^{15}$, $R^{16}$, $R^{21}$, $R^{22}$, $R^{23}$, $R^{24}$, $R^{25}$, $R^{26}$, $R^{31}$, $R^{32}$, $R^{33}$, $R^{34}$, $R^{35}$, $R^{36}$, $R^{41}$, $R^{42}$, $R^{43}$, $R^{44}$, $R^{45}$ et $R^{46}$ représentent chacun indépendamment un atome d'hydrogène ou un substituant sélectionné à partir du groupe constitué par un atome d'halogène, un groupe alkyle, un groupe alcényle, un groupe alcynyle, un groupe aryle, un groupe cyano, un groupe hydroxy, un groupe nitro, un groupe carboxy, un groupe alcoxy, un groupe aryloxy, un groupe silyloxy, un groupe oxy hétérocyclique, un groupe acyloxy, un groupe carbamoyloxy, un groupe alkoxycarbonyloxy, un groupe aryloxycarbonyloxy, un groupe amino, un groupe acylamino, un groupe aminocarbonylamino, un groupe alcoxycarbonylamino, un groupe aryloxycarbonylamino, un groupe sulfamoylamino, un groupe alkylsulfonylamino, un groupe arylsulfonylamino, un groupe mercapto, un groupe alkylthio, un groupe arylthio, un groupe thio hétérocyclique, un groupe sulfamoyle, un groupe sulfo, un groupe alkylsulfinyle, un groupe arylsulfinyle, un groupe alkylsulfonyle, un groupe arylsulfonyle, un groupe acyle, un groupe aryloxycarbonyle, un groupe alcoxycarbonyle, un groupe carbamoyle, un groupe imido, un groupe phosphino, un groupe phosphinyle, un groupe phosphinyloxy, un groupe phosphinylamino et un groupe silyle ; $M^{211}$ représente un atome d'hydrogène, un ion métallique ou un groupe contenant un ion métallique ; et n1 vaut 1 ou 2.

**6.** Composition de teinture infrarouge selon la revendication 2, dans laquelle le composé de diimonium est représenté par la formule suivante (V) :

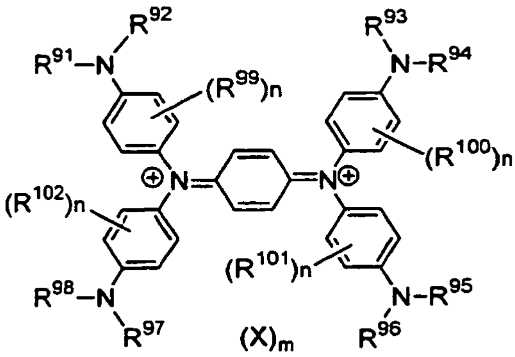

Formule (V)

dans laquelle, dans la formule (V), $R^{91}$, $R^{92}$, $R^{93}$, $R^{94}$, $R^{95}$, $R^{96}$, $R^{97}$ et $R^{98}$ représentent chacun indépendamment un atome d'hydrogène, un groupe alkyle, un groupe cycloalkyle, un groupe aryle, ou un groupe aralkyle; $R^{99}$, $R^{100}$, $R^{101}$ et $R^{102}$ représentent chacun indépendamment un groupe alkyle, un groupe alcoxy, un groupe aryloxy, un atome d'halogène, un groupe alcoxycarbonyle, un groupe amino, un groupe amino à alkyle substitué, un groupe amido, un groupe sulfonamido, un groupe cyano, un groupe nitro, ou un groupe carboxy; $R^{91}$ et $R^{92}$, $R^{93}$ et $R^{94}$, $R^{95}$ et $R^{96}$, $R^{97}$ et $R^{98}$, $R^{91}$ et $R^{99}$, $R^{92}$ et $R^{99}$, $R^{93}$ et $R^{100}$ $R^{94}$ et $R^{100}$ $R^{95}$ et $R^{101}$, $R^{96}$ et $R^{101}$, $R^{97}$ et $R^{102}$, ou $R^{98}$ et $R^{102}$ peuvent chacun indépendamment se lier l'un à l'autre pour former un anneau à 5 ou 6 éléments ; n est un entier de 0 à 3 ; X est un anion ou un cation nécessaire pour neutraliser une charge électrique dans la molécule ; et m est un entier de 0 à 6.

**7.** Composition de teinture infrarouge selon la revendication 1 ou 2, dans laquelle le composé (II) est un composé d'anthraquinone, un composé de thio-indigo, ou un composé de perynone.

**8.** Encre absorbant le rayonnement infrarouge, comprenant la composition de teinture infrarouge selon la revendication 1 ou 2.

**9.** Encre en poudre électrophotographique, comprenant la composition de teinture infrarouge selon la revendication 1 ou 2.

Fig. 1

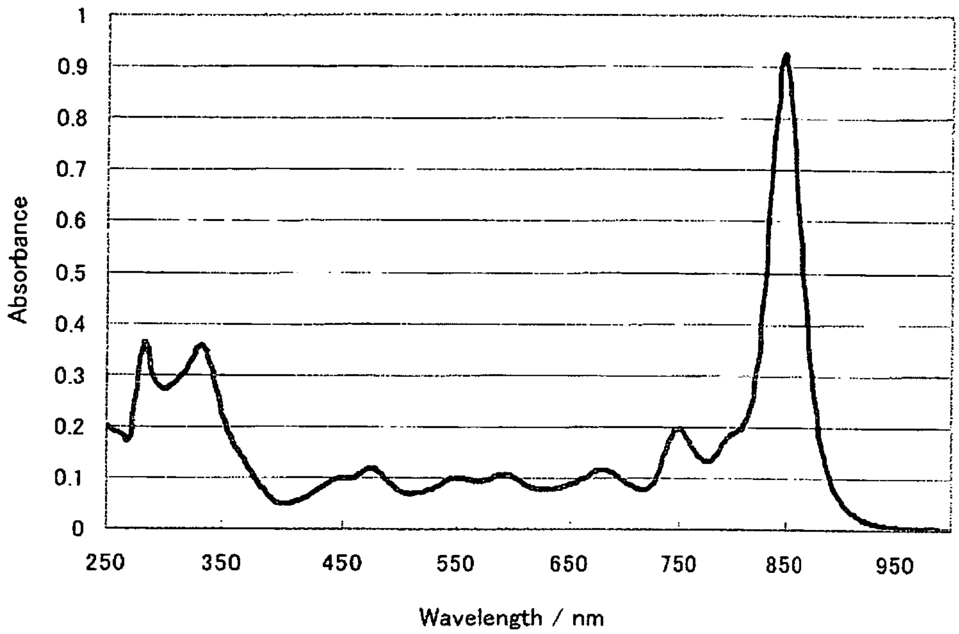
1
0.9
0.8
0.7
0.6
0.5
0.4
0.3
0.2
0.1
0
Absorbance
250
350
450
550
650
750
850
950
Wavelength / nm

Fig. 2

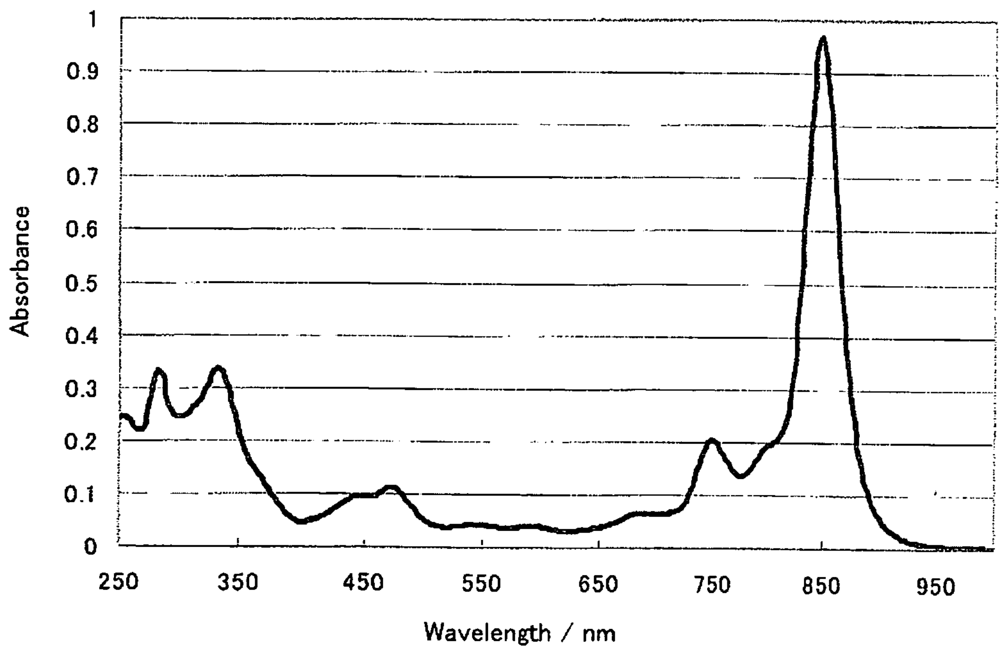
1
0.9
0.8
0.7
0.6
0.5
0.4
0.3
0.2
0.1
0
Absorbance
250
350
450
550
650
750
850
950
Wavelength / nm

Fig. 3

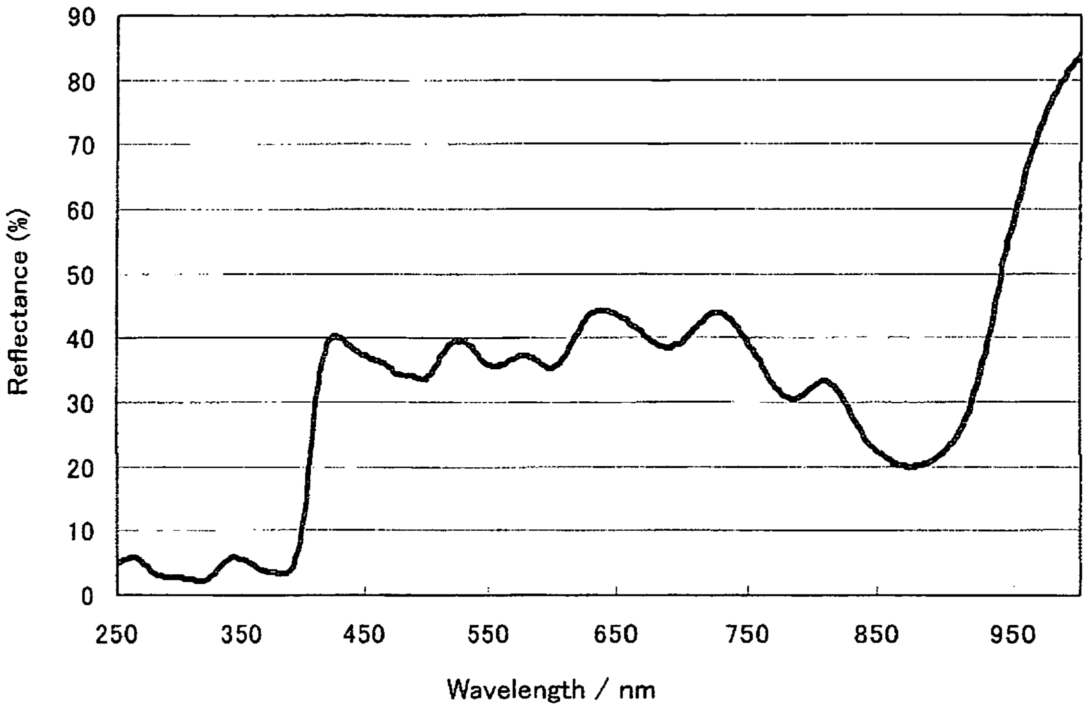
90
80
70
60
50
40
30
20
10
0
Reflectance (%)
250
350
450
550
650
750
850
950
Wavelength / nm

Fig. 4

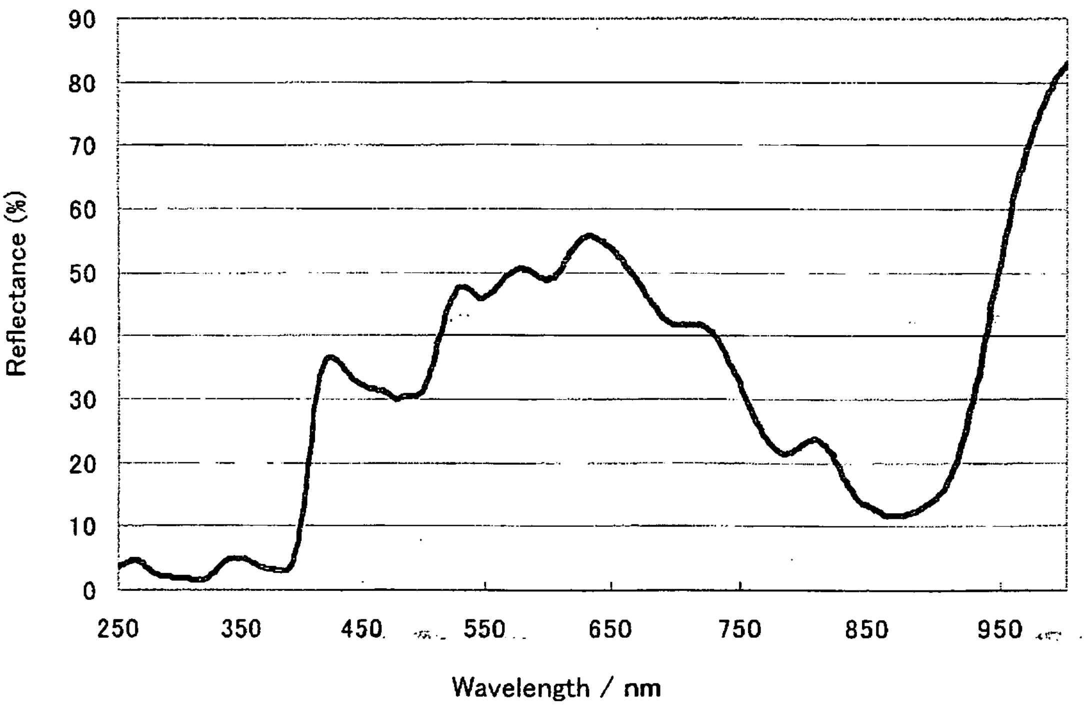
90
80
70
60
50
40
30
20
10
0
Reflectance (%)
250
350
450
550
650
750
850
950
Wavelength / nm

Fig. 5

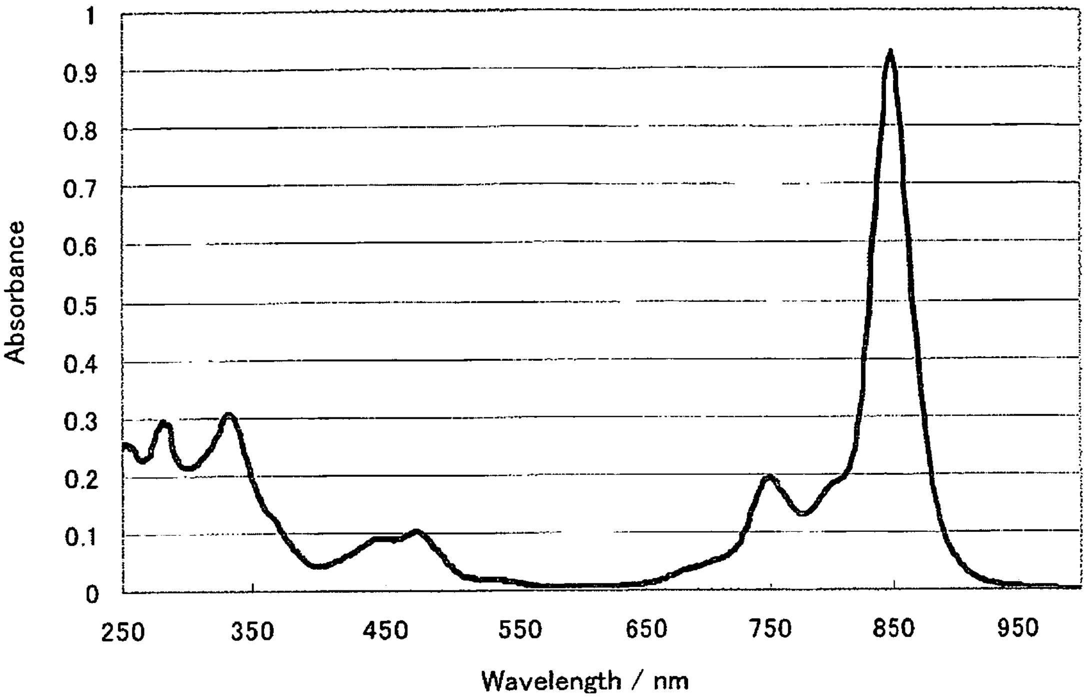
Absorbance
1
0.9
0.8
0.7
0.6
0.5
0.4
0.3
0.2
0.1
0
250
350
450
550
650
750
850
950
Wavelength / nm

Fig. 6

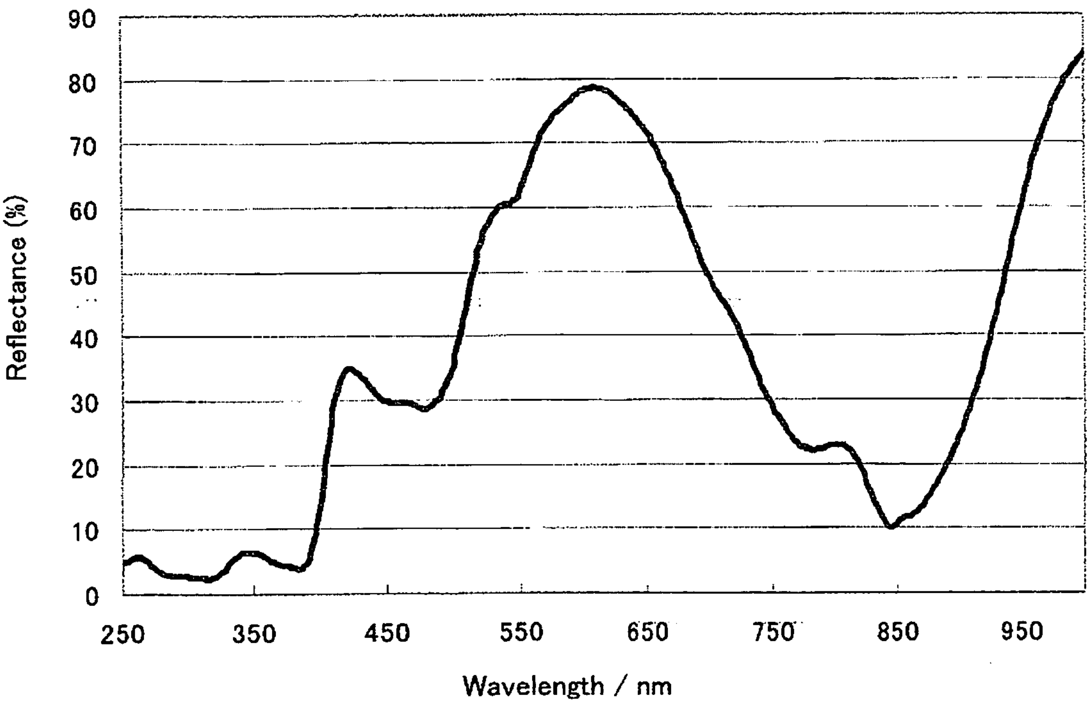
Reflectance (%)
90
80
70
60
50
40
30
20
10
0
250
350
450
550
650
750
850
950
Wavelength / nm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007056105 A
- JP 2003262719 A
- WO 03038003 A
- JP 4325335 B
- JP 2000281919 A
- JP 2043269 A
- JP 2138382 A
- JP 10180947 A
- JP 2003139946 A
- JP 2547016 B
- JP 6250439 A
- JP 3141783 B
- JP 2005221892 A
- JP 2005126725 A
- JP 2002146254 A

### Non-patent literature cited in the description

- *Chemistry-A European Journal,* 2003, vol. 9, 5123-5134
- *Journal of Chemical Society Parkin Transaction I,* 1998, 2453-2458